# EUROPÄISCHE PATENTSCHRIFT

(11) **EP 2 794 791 B1**
(45) Veröffentlichungstag und Bekanntmachung des Hinweises auf die Patenterteilung: **13.06.2018**
(21) Anmeldenummer: 12740603.1
(22) Anmeldetag: 30.07.2012
(51) Int. Cl.: C09J 7/40

(54) **VERWENDUNG EINES LINERS ZUM SCHUTZ VON KLEBEMASSEN**
USE OF A LINER FOR PROTECTING ADHESIVE COMPOUNDS
UTILISATION D'UNE FEUILLE DE SÉPARATION POUR LA PROTECTION DES MASSES ADHÉSIVES

(30) Priorität: 22.12.2011 DE 102011089565
(43) Veröffentlichungstag der Anmeldung: 29.10.2014
(73) Patentinhaber: tesa SE, 22848 Norderstedt (DE)
(72) Erfinder: KEITE-TELGENBÜSCHER, Klaus, 22529 Hamburg (DE); LÜHMANN, Bernd, 22844 Norderstedt (DE); BAI, Minyoung, 22529 Hamburg (DE); DOLLASE, Thilo, 22397 Hamburg (DE)
(86) Internationale Anmeldenummer: PCT/EP2012/064896
(87) Internationale Veröffentlichungsnummer: WO 2013/091911

(56) Entgegenhaltungen:
- EP-A1- 1 072 664
- EP-A2- 0 523 527
- EP-A2- 1 302 520
- WO-A1-2008/072115
- WO-A1-2008/152182
- WO-A1-2009/059299

## Beschreibung

Die vorliegende Erfindung betrifft die Verwendung von zur Sorption mindestens einer permeationsfähigen Substanz befähigtem Gettermaterial zur Ausrüstung von Linern zum Schutz von Klebemassen, wie sie in den Ansprüchen 1-11 definiert ist. Die vorliegende Offenbarung veranschaulicht die Erfindung und betrifft das technische Gebiet der Liner zum Schutz von Klebemassen, wie sie beispielsweise für Klebebänder verwendet werden. Die Offenbarung betrifft weiterhin eine mit dem Liner zumindest partiell bedeckte Klebemasse sowie ein Verfahren zum Schützen einer Klebemasse und die Verwendung von Gettermaterialien in Linern.
Optoelektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen davon. Die entsprechenden Produkte sind je nach gewünschter Anwendung starr oder flexibel ausgebildet, wobei eine zunehmende Nachfrage nach flexiblen Anordnungen besteht. Die Herstellung derartiger Anordnungen erfolgt häufig durch Druckverfahren wie Hochdruck, Tiefdruck, Siebdruck, Flachdruck oder auch so genanntes "non impact printing" wie etwa Thermotransferdruck, Tintenstrahldruck oder Digitaldruck. Vielfach werden aber auch Vakuumverfahren wie beispielsweise Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet. Die Strukturierung erfolgt in der Regel durch Masken.
Als Beispiele für bereits kommerziell erhältliche oder in ihrem Marktpotential interessante optoelektronische Anwendungen seien hier elektrophoretische oder elektrochrome Aufbauten oder Displays, organische oder polymere Leuchtdioden (OLEDs oder PLEDs) in Anzeige- und Display-Vorrichtungen oder als Beleuchtung genannt, ferner Elektrolumineszenzlampen, Licht emittierende elektrochemische Zellen (LEECs), organische Solarzellen wie Farbstoff- oder Polymersolarzellen, anorganische Solarzellen, insbesondere Dünnschichtsolarzellen, zum Beispiel auf der Basis von Silizium, Germanium, Kupfer, Indium und Selen, organische Feldeffekt-Transistoren, organische Schaltelemente, organische optische Verstärker, organische Laserdioden, organische oder anorganische Sensoren oder auch organisch- oder anorganisch basierte RFID-Transponder angeführt.

Als technische Herausforderung für die Realisierung einer ausreichenden Lebensdauer und Funktion von optoelektronischen Anordnungen auf dem Gebiet der anorganischen und organischen Optoelektronik, ganz besonders der organischen Optoelektronik, ist ein Schutz der darin enthaltenen Komponenten vor Permeaten zu sehen. Als Permeate werden dabei in der Regel gasförmige oder flüssige Stoffe angesehen, die in einen Festkörper eindringen und diesen gegebenenfalls durchdringen beziehungsweise durchwandern. Dementsprechend können viele niedermolekulare organische oder anorganische Verbindungen Permeate sein, wobei im vorliegend beschriebenen Zusammenhang Wasserdampf und Sauerstoff von besonderer Bedeutung sind.

Eine Vielzahl von optoelektronischen Anordnungen - besonders bei Verwendung von organischen Materialien - ist sowohl gegen Wasserdampf als auch gegen Sauerstoff empfindlich. Während der Lebensdauer der elektronischen Anordnungen ist deshalb ein Schutz durch eine Verkapselung erforderlich, da andernfalls die Leistung über den Anwendungszeitraum nachlässt. Anderenfalls können sich beispielsweise durch eine Oxidation der Bestandteile von Licht emittierenden Anordnungen wie ElektrolumineszenzLampen (EL-Lampen) oder organischen Leuchtdioden (OLED) die Leuchtkraft, bei elektrophoretischen Displays (EP-Displays) der Kontrast oder bei Solarzellen die Effizienz innerhalb kurzer Zeit drastisch verringern.

Auf dem Gebiet der anorganischen und insbesondere der organischen Optoelektronik gibt es daher einen hohen Bedarf für flexible Klebelösungen, die eine Barriere für Permeate wie Sauerstoff und/oder Wasserdampf darstellen. Im Stand der Technik sind bereits einige Ansätze für derartige Klebelösungen zu finden.

So werden häufiger Flüssigklebstoffe und Adhäsive auf Basis von Epoxiden als Barriereklebemassen verwendet, wie sie beispielsweise in WO 98/21287 A1, US 4,051,195 A und US 4,552,604 A beschrieben sind. Ihr Haupteinsatzgebiet sind Randverklebungen starrer Anordnungen, aber auch mäßig flexible Anordnungen. Die Aushärtung erfolgt thermisch oder mittels UV-Strahlung.

Der Einsatz dieser flüssigen Klebstoffe bringt allerdings auch eine Reihe von unerwünschten Effekten mit sich. So können niedermolekulare Bestandteile (VOCs - volatile organic compounds) die empfindlichen elektronischen Strukturen der Anordnung schädigen und die Produktion erschweren. Der Klebstoff muss darüber hinaus aufwändig auf jeden einzelnen Bestandteil der Anordnung aufgebracht werden. Die Anschaffung von teuren Dispensern und Fixiereinrichtungen ist notwendig, um eine genaue Positionierung zu gewährleisten. Die Art der Auftragung verhindert zudem einen schnellen kontinuierlichen Prozess. Im anschließend erforderlichen Laminationsschritt kann aufgrund der geringen Viskosität das Erreichen einer definierten Schichtdicke und Verklebungsbreite erschwert sein.

Eine Alternative ist der Einsatz von Haft- oder Heißschmelzklebern zur Versiegelung von optoelektronischen Aufbauten. Unter den Haftklebemassen werden dabei bevorzugt solche eingesetzt, die nach der Verklebung durch eingebrachte Energie (zum Beispiel aktinische Strahlung oder Wärme) vernetzbar sind. Derartige Massen werden beispielsweise in US 2006/0100299 A1 und WO 2007/087281 A1 beschrieben. Ihr Vorteil liegt insbesondere darin, dass durch die Vernetzung die Barrierewirkung der Klebemassen verbessert werden kann.

Ebenso ist die Verwendung von Heißschmelzklebemassen im Stand der Technik bekannt. Vielfach werden hier Copolymere des Ethylens eingesetzt, zum Beispiel Ethylen-Ethylacetat (EEA), Ethylen-Acrylsäure-Copolymer (EAA), Ethylen-Butylacrylat (EBA) oder Ethylen-Methylacrylat (EMA). Insbesondere für auf Siliziumwafern basierende Solarzellenmodule werden in der Regel vernetzende Ethylen-Vinylacetat-(EVA)-Copolymere eingesetzt. Die Vernetzung findet während des Versiegelungsprozesses unter Druck und bei Temperaturen oberhalb von etwa 120 C statt. Dieser Prozess ist für viele auf organischen Halbleitern basierende oder in Dünnschichtverfahren hergestellte optoelektronische Aufbauten aufgrund der hohen Temperaturen und der mechanischen Belastung durch den Druck nachteilig.

Heißschmelzklebemassen auf der Basis von Blockcopolymeren oder funktionalisierten Polymeren sind beispielsweise in WO 2008/036707 A2, WO 2003/002684 A1, JP 2005-298703 A und US 2004/0216778 A1 beschrieben. Ein Vorteil dieser Klebemassen ist, dass durch die Klebstoffe selbst keine oder nur sehr wenig Substanz in den zu verkapselnden Aufbau eingebracht wird, die den Aufbau selbst schädigt, wohingegen dieses Problem vor allem bei reaktiven Flüssigklebersystemen, insbesondere solchen auf Acrylat- oder Epoxidharzbasis, relevant ist. Aufgrund der hohen Anzahl reaktiver Gruppen weisen diese Systeme eine relativ hohe Polarität auf, so dass insbesondere Wasser darin enthalten ist. Die Menge liegt in der Regel im Bereich von weniger als 100 ppm bis hin zu mehr als 1 %. Unter anderem auch aus diesem Grund werden solche Flüssigkleber vornehmlich als Randversiegelung der elektronischen Anordnungen eingesetzt, wobei sie nicht in direktem Kontakt mit den aktiven elektronischen Materialien stehen.

Eine weitere Möglichkeit, der Problematik eingeschleppter Permeate zu begegnen, besteht darin, zusätzlich noch ein absorbierendes Material - einen sogenannten Getter - innerhalb der Verkapselung einzuschließen, welches aus dem Klebstoff herausdiffundierendes oder hindurchpermeierendes Wasser oder andere Permeate bindet, indem es sie zum Beispiel absorbiert oder adsorbiert. Ein solches Vorgehen ist unter anderem in EP1407818 A1, US 2003/0057574 A1 und in US 2004-0169174 A1 beschrieben.

Eine weitere Maßnahme ist die Ausstattung des Klebstoffs und/oder des Substrats und/oder der Abdeckung des elektronischen Aufbaus mit solchen bindenden Eigenschaften, wie es zum Beispiel in WO 2006/036393 A2, DE10 2009 036 970 A1 und DE 10 2009 036 968 A1 beschrieben wird.

Ferner ist es möglich, besonders permeatarme Rohstoffe einzusetzen oder den Klebstoff bei der Herstellung oder vor der Applikation von permeierenden Substanzen zu befreien, zum Beispiel durch thermische Trocknung, Vakuumtrocknung, Gefriertrocknung oder das Einmischen von Gettern. Nachteilig an derartigen Verfahren sind die lange Trockendauer und die gegebenenfalls hohen oder niedrigen Trocknungstemperaturen, die den Klebstoff schädigen oder chemische Reaktionen, wie zum Beispiel eine Vernetzung, auslösen können. Auch ist der Prozess des Einmischens und späteren Abtrennens der Getter aufwändig.

Werden solche kleberseitigen Maßnahmen zur Verminderung des Eintrags von schädlichen permeierenden Substanzen in den zu schützenden Aufbau getroffen, so ist es notwendig, die hergestellten Eigenschaften bis zur Verwendung des Klebstoffs möglichst uneingeschränkt zu erhalten. So ist es zum Beispiel notwendig, einen besonders wasserfrei hergestellten Klebstoff vor der Wasseraufnahme aus der Umgebung zu schützen.

Diese Aufgabe wird in der Regel durch eine permeationsdichte oder zumindest -hemmende Verpackung der Klebstoffe gelöst. Flüssigklebstoffe werden in der Regel in entsprechende Behälter, zum Beispiel aus Metall, abgefüllt. Klebebänder werden oft in flexible Beutel aus permeationshemmendem Material - zum Beispiel aus Polyethylenfolie oder einem Folienlaminat aus Aluminium und Polyester - eingeschweißt. Auch die Verpackungsmaterialien selbst müssen dabei möglichst frei von Permeaten sein, die zur Füllgutseite hin freigesetzt werden könnten.

Um Schwächen in der Dichtheit der Verpackung entgegenzuwirken oder eingeschlossene Permeate schnell zu binden, wird oft auch ein Getter mit verpackt, zum Beispiel in Gestalt eines mit Silicagel oder Zeolith gefüllten Beutels. Dieser Getter ist in der Regel nicht in direktem Kontakt mit dem Füllgut. Nachteilig ist bei diesem Verfahren insbesondere der erhöhte Verpackungsaufwand.

Ein spezifisches Problem tritt bei der Verpackung von flächigen Klebstoffen, also Klebebändern oder Klebefolien, auf: Werden diese als Zuschnitte gestapelt oder zur Rolle aufgewickelt, wird dabei Gas - beispielsweise Luft - eingeschlossen, das sich nicht im Austausch mit dem weiteren in der Verpackung verbleibenden Gasraum befindet. Enthaltene unerwünschte Permeate, zum Beispiel Wasserdampf, gelangen also nicht zum in der Verpackung befindlichen Gettermaterial und können somit in die Klebemasse übertreten. Darüber hinaus enthalten solche Klebebänder in der Regel ein temporäres Abdeckmaterial, den sogenannten Liner, sowie oft auch ein Trägermaterial. Diese können ebenfalls unerwünschte Permeate enthalten, die insbesondere aufgrund der großen Kontaktfläche mit dem Klebstoff leicht in diesen permeieren können. In die Verpackung eingebrachte Getterbeutel oder -pads können diese Permeate nicht zuverlässig abfangen und binden. Eine vollständige Befreiung der Liner- und Trägermaterialien von den unerwünschten Permeaten, zum Beispiel durch Trocknung, ist langwierig und aufwändig. Aus EP 2 078 608 A1 ist es bekannt, Linermaterialien zu verwenden, die eine spezielle Permeationsbarriere enthalten. Dieses Konzept ist jedoch nicht wirksam gegen im Liner enthaltene oder zwischen Liner und Klebemasse eingeschlossene Permeate.

Liner mit abhäsiver Schicht und einer Beschichtung enthaltend ein sorbierendes Material sind aus der WO 2008/152182 A1. Diese schützen bedruckbare Etikettenoberflächen vor Kontamination mit migrierenden Anteilen aus der Silikon-Trennbeschichtung der Liner. Es besteht somit ein anhaltender Bedarf an Linern, die eine flächige Klebemasse zuverlässig vor dem Einfluss von Permeaten schützen.
Aufgabe der vorliegenden Erfindung ist es daher, einen Liner zur Verfügung zu stellen, der eine Klebemasse sowohl vor aus der Umgebung stammenden Permeaten als auch vor beim Aufwickeln oder Stapeln und sonstigen Verarbeitungsschritten eingeschlossenen Permeaten schützt. Dementsprechend soll bei einem Produkt, beispielsweise einem Klebeband, das eine weitgehend permeatfreie Klebeschicht enthält, diese Klebeschicht für die Zeit der Lagerung und des Transports weiter weitgehend frei von Permeaten gehalten werden, wobei die Klebeschicht günstigenfalls sogar noch von verbliebenen Permeaten befreit wird.
Die Lösung der Aufgabe beruht auf dem Grundgedanken der vorliegenden Erfindung, einen Liner mit darin enthaltenen Gettermaterialien zur Verfügung zu stellen.

Gegenstand der vorliegenden Erfindung ist daher die Verwendung von zur Sorption mindestens einer permeationsfähigen Substanz befähigtem Gettermaterial zur Ausrüstung von Linern zum Schutz von Klebemassen. In einer Ausführungsform enthalten die Liner mindestens eine abhäsive Trennschicht, und das Gettermaterial ist als dispergierte Phase in mindestens einer Schicht des Liners enthalten. Ein derartiger Liner verhindert vorteilhaft das Eindringen von Permeaten aus der Umgebung in die zu schützende Klebemasse und ist in der Lage, auch in der Klebemasse enthaltene und zwischen Liner und Klebemasse eingeschlossene Permeate zu binden. Die Klebemasse selbst beziehungsweise ein die Klebemasse enthaltendes Produkt muss somit nicht gesondert vorbehandelt - beispielsweise getrocknet - werden.
Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (zum Beispiel Etiketten) eingesetzt.

Unter einem Liner wird demgemäß ein eine antihaftende (abhäsive) Oberfläche aufweisendes Abdeckmaterial verstanden, das zum temporären Schutz einer Klebemasse direkt auf die Masse aufgebracht wird und in der Regel unmittelbar vor Applikation der Klebemasse durch einfaches Abziehen entfernt werden kann.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner ist nicht Bestandteil eines Klebebandes, sondern nur ein Hilfsmittel zu dessen Herstellung, Lagerung oder für die Weiterverarbeitung. Darüber hinaus ist ein Liner im Gegensatz zu einem Klebebandträger nicht fest mit einer Klebstoffschicht verbunden, sondern der Verbund ist nur temporär und nicht dauerhaft.

Ein erfindungsgemäß ausgerüsteter Liner kann mindestens eine abhäsive Trennschicht enthalten. Der Begriff "abhäsiv" drückt erfindungsgemäß aus, dass die Trennschicht eine geringere Adhäsion zu der abzudeckenden Klebemasse aufweist als die Klebemasse zum in ihrer Anwendung vorgesehen Applikationsuntergrund und gegebenenfalls zu dem zur Klebemasse gehörenden Trägermaterial.

Das Material der abhäsiven Trennschicht ist bevorzugt ausgewählt aus der Gruppe umfassend Silikone, fluorierte Silikone, Silikon-Copolymere, Wachse, Carbamate, Fluorpolymere und Polyolefine oder Mischungen aus zwei oder mehr der genannten Stoffe. Besonders bevorzugt ist das Material der abhäsiven Trennschicht ausgewählt aus Silikonen und Polyolefinen.

Das die abhäsive Trennschicht bildende System ist vorzugsweise so eingestellt, dass eine Diffusion von abhäsiven Substanzen in die Klebemasse quasi ausbleibt. Analytisch lassen sich gegebenenfalls noch Substanzen aus der abhäsiven Beschichtung nachweisen, welche jedoch auf mechanischen Abrieb zurückzuführen sind.
Bevorzugt weist die abhäsive Trennschicht quasi keinen Dampfdruck bei Raumtemperatur auf.

Bevorzugt besteht die abhäsive Trennschicht aus einem Silikon-System. Zur Herstellung solcher Silikon-Systeme werden bevorzugt vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutylzinndiacetat in der Masse zugegen.

Silikonbasierende Trennmittel auf additionsvernetzender Basis lassen sich durch Hydrosilylierung härten. Diese Trennmittel umfassen üblicherweise die folgenden Bestandteile:
- ein alkenyliertes Polydiorganosiloxan (insbesondere lineare Polymere mit endständigen Alkenylgruppen),
- ein Polyorganowasserstoffsiloxan-Vernetzungsmittel sowie
- einen Hydrosilylierungskatalysator.
Als Katalysatoren für additionsvernetzende Silikonsysteme (Hydrosilylierungs-Katalysatoren) haben sich beispielsweise Platin oder Platinverbindungen, wie zum Beispiel der Karstedt-Katalysator (eine Pt(0)-Komplexverbindung) durchgesetzt.

Thermisch härtende Trennbeschichtungen sind somit häufig Mehrkomponentensysteme, welche typischerweise aus folgenden Komponenten bestehen:
a) einem linearen oder verzweigten Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive® 921 oder 610, beide kommerziell erhältlich bei der Wacker-Chemie GmbH;
b) einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei der Wacker-Chemie GmbH kommerziell erhältlich sind;
c) einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei der Wacker-Chemie GmbH;
d) einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierten Siloxanen verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Silikonhaltige Systeme lassen sich, beispielsweise bei Dow Corning, Wacker oder Rohm&Haas, kommerziell erwerben.
Beispielhaft sei "Dehesive® 914" genannt, das ein Vinylpolydimethylsiloxan, den Vernetzer "Crosslinker V24", ein Methylhydrogenpolysiloxan und den Katalysator "Catalyst Ol", einen Platin-Katalysator in Polydimethylsiloxan, enthält. Dieses System ist bei der Wacker-Chemie GmbH erhältlich.
Verwendbar ist des Weiteren zum Beispiel das auf dem Markt erhältliche additionsvernetzende Silikon-Release-System "Dehesive® 940A" der Wacker-Chemie mit einem zugehörigen Katalysatorsystem, das im unvernetzten Zustand aufgetragen wird und dann nachträglich im aufgetragenen Zustand vernetzt.

Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5,5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet. Daher wird bei der Herstellung von antiadhäsiven Silikonbeschichtungen die Anwesenheit von Kontaktgiften, insbesondere von Platingiften, streng vermieden. Vorzugsweise ist daher das erfindungsgemäß im Liner enthaltene Gettermaterial kein Platingift.

Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebemassen eingesetzt werden.

Polyolefinische Trennschichten können sowohl aus thermoplastischen, nicht elastischen als auch aus elastischen Materialien bestehen. Zum Beispiel können derartige Trennschichten auf Polyethylen basieren. Dafür sind Polyethylene im gesamten realisierbaren Dichtebereich von circa 0,86 g/cm³ bis 1 g/cm³ nutzbar. Für bestimmte Anwendungen bieten sich Polyethylene niederer Dichte bevorzugt an, da sie häufig niedrigere Trennkräfte bewirken.

Trennschichten mit elastischen Eigenschaften können gleichfalls aus olefinhaltigen Elastomeren bestehen. Beispiele umfassen sowohl statistische Copolymere als auch Blockcopolymere. Von den Blockcopolymeren seien beispielhaft Ethylen-Propylen-Kautschuke, Butylkautschuk, Polyisobutylen, Ethylen-Blockcopolymere sowie teilweise und vollständig hydrierte Styrol-Dien-Blockcopolymere wie zum Beispiel Styrol-Ethylen/Butylen- und Styrol-Ethylen/Propylen-Blockcopolymere genannt.

Geeignete Trennschichten können ferner auch durch Acrylatcopolymere gestellt werden. Bevorzugte Ausführungsformen dieser Variante sind Acrylatpolymere mit einer statischen Glastemperatur (mid-point-TG ermittelt über Differentialcalorimetrie) unterhalb Raumtemperatur. Die Polymere sind typischerweise vernetzt. Die Vernetzung kann dabei chemischer oder physikalischer Natur, wie sie beispielsweise in Blockcopolymeren realisiert ist, sein.

Die mindestens eine abhäsive Trennschicht weist vorzugsweise eine Schichtdicke von 0,5 µm bis 500 µm auf, besonders bevorzugt von 1 µm bis 250 µm, beispielsweise von 1,5 µm bis 100 µm. Diese Schichtdickenbereiche gehen teilweise über die üblichen Schichtdicken, insbesondere von Silikontrennschichten, die bei circa 500 nm bis 3 µm liegen, hinaus und berücksichtigen einen eventuellen Gehalt der Trennschicht an Gettermaterialien.

Die abhäsive Trennschicht kann direkt mittels eines Streichbalkens aus der Lösung, Emulsion oder Dispersion aufgebracht werden. Das verwendete Löse-, Emulsionsbeziehungsweise Dispergiermittel kann in diesem Fall anschließend in einem handelsüblichen Trockner verdampft werden. Ebenso ist eine lösungsmittelfreie Beschichtung mittels einer Düsen- oder Walzenbeschichtungsanlage geeignet.

Die abhäsive Schicht kann erfindungsgemäß auch gedruckt werden. Hierzu eignen sich nach dem Stand der Technik Hoch-, Tief- und Siebdruckverfahren. Bevorzugt werden hier rotative Druckverfahren angewendet. Ferner können abhäsive Beschichtungen auch durch Aufsprühen aufgebracht werden. Dies kann im rotativen Sprühverfahren geschehen, gegebenenfalls auch elektrostatisch.

Das Material der abhäsiven Trennschicht und das Material einer optional vorhandenen Trägerschicht müssen nicht als homogene Materialien vorliegen, sondern können auch aus Mischungen mehrerer Materialien bestehen. So können die Materialien jeweils zur Optimierung der Eigenschaften und/oder Verarbeitung mit einem oder mehreren Additiven wie Harzen, Wachsen, Weichmachern, Füllstoffen, Pigmenten, UV-Absorbern, Lichtschutzmitteln, Alterungsschutzmitteln, Vernetzungsmitteln, Vernetzungspromotoren, Entschäumern, Entgasungsmitteln, Benetzungsmitteln, Dispergierhilfsmitteln, Rheologieadditiven oder Elastomeren abgemischt sein.

Im einfachsten Fall besteht der erfindungsgemäß ausgerüstete Liner nur aus einer abhäsiven Trennschicht, welche mindestens ein Gettermaterial enthält. Im Rahmen einer weiteren Ausführungsform enthält der Liner mindestens eine Trägerschicht. Die abhäsive Trennschicht kann in diesem Fall direkt auf der Trägerschicht aufgebacht sein und diese zumindest partiell überdecken. Üblicherweise ist eine abhäsive Trennschicht als durchgängige (nicht unterbrochene) äußerste Schicht zumindest auf der der Klebemasse zugewandten Seite des Trägermaterials aufgebracht.

Der Liner kann erfindungsgemäß auch - unabhängig vom Vorhandensein einer Trägerschicht - beidseitig zumindest partiell eine abhäsive Oberfläche aufweisen, die gleich oder verschieden sein kann.

Als Trägermaterial des Liners können Papiere, kunststoffbeschichtete Papiere oder Folien eingesetzt werden, wobei Folien, insbesondere dimensionsstabile Kunststoff- oder Metallfolien, bevorzugt werden. Die mindestens eine Trägerschicht besteht daher bevorzugt aus Polyestern, insbesondere aus Polyethylenterephthalat, zum Beispiel aus biaxial verstrecktem Polyethylenterephthalat, oder aus Polyolefinen, insbesondere aus Polybuten, Cyclo-Olefin-Copolymer, Polymethylpenten, Polypropylen oder Polyethylen, zum Beispiel aus monoaxial verstrecktem Polypropylen, biaxial verstrecktem Polypropylen oder biaxial verstrecktem Polyethylen. Polyesterfolien weisen den Vorteil auf, dass sie gute Barriereeigenschaften haben, für Temperaturstabilität sorgen und eine erhöhte mechanische Stabilität einbringen. Ganz besonders bevorzugt besteht daher die mindestens eine Trägerschicht aus einer Polyesterfolie, beispielsweise aus biaxial verstrecktem Polyethylenterephthalat.

Auch Papiere oder Vliese sind als Trägermaterial geeignet.

In einer bevorzugten Ausführungsform enthält der erfindungsgemäß ausgerüstete Liner eine Barriereschicht gegen ein oder mehrere spezifische(s) Permeat(e), insbesondere gegen Wasserdampf und Sauerstoff. Es ist erfindungsgemäß ebenfalls bevorzugt, wenn der Liner mindestens eine Trägerschicht enthält und diese Trägerschicht eine Barrierefunktion gegen ein oder mehrere spezifische(s) Permeat(e) aufweist. Eine derartige Barrierefunktion kann aus organischen oder anorganischen Materialien bestehen. Trägermaterialien mit Barrierrefunktion sind in EP 2 078 608 A1 ausführlich dargestellt.

Besonders bevorzugt enthält der erfindungsgemäß ausgerüstete Liner mindestens eine anorganische Barriereschicht. Als anorganische Barriereschichten eignen sich besonders gut im Vakuum (zum Beispiel mittels Verdampfen, CVD, PVD, PECVD) oder unter Atmosphärendruck (zum Beispiel mittels Atmosphärenplasma, reaktiver Coronaentladung oder Flammenpyrolyse) abgeschiedene Metalle oder insbesondere Metallverbindungen wie Metalloxide, -nitride oder-hydronitride, beispielsweise Oxide oder Nitride des Siliziums, des Bors, des Aluminiums, des Zirkoniums, des Hafniums oder des Tellurs oder Indium-Zinn-Oxid (ITO). Ebenfalls geeignet sind mit weiteren Elementen dotierte Schichten der vorstehend genannten Varianten. Geeignete Barriereschichten sind auch Metallfolien. Sehr bevorzugt enthält der erfindungsgemäß ausgerüstete Liner beispielsweise eine Aluminiumfolie, die vorteilhaft als Trägermaterial mit Barrierefunktion dient.

Besonders bevorzugt enthält der erfindungsgemäß ausgerüstete Liner mindestens eine Trägerschicht und mindestens eine Barriereschicht gegen ein oder mehrere spezifische Permeate, wobei die Barriereschicht und die Trägerschicht als unmittelbar aufeinander folgende Schichten vorliegen. Als besonders geeignetes Verfahren zum Aufbringen einer anorganischen Barriereschicht sind High-Power-Impulse-Magnetron-Sputtering und Atomic-Layer-Deposition zu nennen, durch die sich besonders permeationsdichte Schichten bei geringer Temperaturbelastung der Trägerschicht verwirklichen lassen. Bevorzugt wird eine Permeationsbarriere der Trägerschicht mit Barrierefunktion beziehungsweise des Verbundes aus Trägerschicht und Barriereschicht gegen Wasserdampf (WVTR) von < 1 g/(m²*d) und/oder gegen Sauerstoff (OTR) von < 1 cm³/(m²*d*bar), wobei der Wert auf die jeweils im Liner verwendete Dicke der Trägerschicht bezogen ist, also nicht auf eine spezifische Dicke normiert ist. Die WVTR wird dabei bei 38°C und 90% relativer Luftfeuchtigkeit nach ASTM F-1249 und die OTR bei 23°C und 50% relativer Luftfeuchtigkeit nach DIN 53380-Teil 3 gemessen.

Erfindungsgemäß wird ein zur Sorption mindestens einer permeationsfähigen Substanz befähigtes Gettermaterial zur Ausrüstung von Linern zum Schutz von Klebemassen verwendet.

Unter "Sorption" wird der Vorgang der Aufnahme eines Stoffes oder mehrerer Stoffe durch einen anderen Stoff - erfindungsgemäß durch das Gettermaterial - verstanden. Die Sorption der permeationsfähigen Substanz(en) durch das Gettermaterial kann dabei beispielsweise durch Absorption oder Adsorption erfolgen, wobei Adsorption sowohl in Form von Chemisorption als auch von Physisorption auftreten kann.

Unter einer "permeationsfähigen Substanz" wird eine Substanz verstanden, die als gasförmiger oder flüssiger, gegebenenfalls auch als fester Stoff, in die zu schützende Klebemasse eindringen und diese nachfolgend durchdringen kann. Derartige Substanzen wurden vorstehend und werden nachstehend als "Permeate" bezeichnet. Die Permeate können aus der Klebemasse selbst oder aus der Umgebung, beispielsweise auch aus dem Trägermaterial eines mit der Klebemasse beschichteten Klebebandes stammen. Aus der Klebemasse beziehungsweise aus dem Klebeband selbst kommen häufig niedermolekulare organische Verbindungen wie Lösemittelreste, Restmonomere, Öle, Harzkomponenten, Weichmacher sowie Wasser. Aus der Umgebung stammen oft Wasser, flüchtige organische Verbindungen (VOCs), niedermolekulare Kohlenwasserstoffe und Sauerstoff. Als "permeationsfähige Substanzen" werden insbesondere die folgenden Substanzen angesehen:
Acetonitril, 1-Butanol, Chlorbenzol, Chloroform (Trichlormethan), Cyclohexan, Diethylether, 1,4-Dioxan, Eisessig (Essigsäure), Essigsäureanhydrid, Essigsäureethylester (Ethylacetat, Essigester), Essigsäure-n-Butylester (n-Butylacetat), Essigsäure-tert.-butylester (t-Butylacetat), Ethanol, Methanol, n-Hexan, n-Heptan, 3-Hexanon, 2-Propanol (Isopropanol), 3-Methyl-1-butanol (Isoamylalkohol), Methylenchlorid (Dichlormethan), Methylethylketon (Butanon), Methylisobutylketon, Nitromethan (Nitrocarbol), n-Pentan, 2-Pentanon, 3-Pentanon, Petrolether (Leichtbenzin), Benzin, Propanol, Pyridin (Azin), tert-Butylmethylether, Tetrachlorethen (Perchlorethen), Tetrahydrofuran, Toluol, Trichlorethan, Triethylamin, Xylol, Sauerstoff, Methan, Ethan, Propan, Propen, Butan, Buten, Kohlenstoffdioxid, Ozon, Schwefeldioxid, Wasser.

Unter einem "Gettermaterial" wird ein Material verstanden, das - im Sinne des vorstehend als "Sorption" definierten Vorgangs - mindestens eine permeationsfähige Substanz aufnehmen kann. Das Gettermaterial ließe sich daher auch als "Sorbens" oder als "Sorptionsmittel" bezeichnen. Vorzugsweise ist das Gettermaterial mindestens zur Sorption von Wasser befähigt.

Unter "als dispergierte Phase in mindestens einer der Schichten des Liners enthalten" wird verstanden, dass das Gettermaterial fein verteilt in der/den betreffenden Schicht(en) des Liners vorliegt. Grundsätzlich sind Form und Größe der Gettermaterial-Teilchen - selbstverständlich innerhalb der sich aus dem Aufbau und der Funktion des Liners ergebenden Limitierungen - keine Grenzen gesetzt. Das Merkmal "als dispergierte Phase enthalten" schließt eine molare Dispersion des Gettermaterials und damit eine echte (molekulare) Lösung des Gettermaterials in dem Material der betreffenden Schicht ebenso ein wie eine Dispersion von Gettermaterial-Primärteilchen, Gettermaterial-Aggregaten und Gettermaterial-Agg lomeraten.

Das Merkmal "als dispergierte Phase in mindestens einer der Schichten des Liners enthalten" bedeutet darüber hinaus, dass das Gettermaterial keine eigenständige, durchgehende Schicht bildet, sondern generell in Form mehrerer, verteilter Teilchen vorliegt. Es bedeutet hingegen nicht, dass eine ideale oder statistische Verteilung der Gettermaterial-Teilchen im Schichtmaterial vorliegen muss. Die Gettermaterial-Teilchen können sich zum Beispiel durchaus in bestimmten Bereichen innerhalb der Schicht konzentrieren beziehungsweise können bestimmte Bereiche einer Getter-haltigen Schicht des Liners auch frei von Gettermaterial sein.

Die Verteilung des Gettermaterials als dispergierte Phase in einer Schicht des Liners weist gegenüber einer durchgehenden, eigenständigen Gettermaterial-Schicht den Vorteil auf, dass die spezifische Oberfläche zur Aufnahme von Permeaten größer ist als im Falle einer durchgehenden Schicht und somit höhere Aufnahmekapazitäten für Permeate realisiert werden können.

Grundsätzlich ist die Größe der Partikel des Gettermaterials durch die Anforderungen der Dicke der diese jeweils enthaltenden Schicht, beispielsweise der abhäsiven Trennschicht oder der Trägerschicht, begrenzt. Als eine obere Grenze für die Größe der Partikel können daher etwa 200 µm angesehen werden, bevorzugt wird aber Gettermaterial in Form von Teilchen mit einer Korngröße von maximal 50 µm verwendet.

Das mindestens eine Gettermaterial ist bevorzugt in mindestens einer der Schichten des Liners enthalten. Dies bedeutet, dass durchaus mehrere Schichten des Liners, beispielsweise die Trägerschicht und die abhäsive Trennschicht und gegebenenfalls auch noch weitere Schichten das gleiche oder auch verschiedene Gettermaterial(ien) enthalten können.

Vorzugsweise liegt das Gettermaterial in Form von Partikeln in einer Partikelgrößenverteilung vor, bei der maximal 1 Vol.-% des Gettermaterials die mittlere Schichtdicke der gettermaterialhaltigen Schicht überschreitet. Dies hat den Vorteil, dass die Getterpartikel nicht aus der jeweiligen Schicht herausragen und damit die Oberflächeneigenschaften stark negativ beeinflussen. In einer besonders bevorzugten Ausführungsform liegt das gesamte im erfindungsgemäß ausgerüsteten Liner enthaltene Gettermaterial in einer Partikelgrößenverteilung vor, bei der maximal 1 Vol.-% des Gettermaterials die mittlere Schichtdicke der gettermaterialhaltigen Schicht überschreitet.

Unter "Partikeln" werden im Sinne von DIN 53206-1: 1972-08 Primärteilchen, Aggregate und Agglomerate des Gettermaterials beziehungsweise der Gettermaterialien verstanden. Unter der "Partikelgröße" wird die maximale Ausdehnung eines Partikels verstanden. Die Bestimmung der Partikelgröße erfolgt bevorzugt mittels Laserbeugung nach ISO 13320 (wobei im Dispersionsschritt Agglomerate dispergiert werden, nicht jedoch Aggregate), aber auch andere dem Fachmann bekannte Verfahren sind geeignet.

Besonders bevorzugt liegen alle Gettermaterialien nanoskalig vor, das heißt die maximale Ausdehnung in mindestens einer Dimension beträgt weniger als 500 nm, ganz besonders bevorzugt weniger als 200 nm, beispielsweise weniger als 100 nm.

Solche Gettermaterialien können beispielsweise dispergiertes pyrogenes Silica wie Aerosil der Firma Evonik, Calcium Oxide Nanopowder der Firma Sigma-Aldrich, Calciumchlorid CA-CI-02-NP der Firma American Elements (Los Angeles), Nanozeolith LTA oder FAU der Firma Nanoscape (Planegg-Martinsried) oder nanoskaliges Zeolith Lucidot NCL 40 der Firma Clariant (Frankfurt) sein.

In einer weiteren bevorzugten Ausführungsform liegt das Gettermaterial in Form von Partikeln in einer Partikelgrößenverteilung vor, bei der zumindest 10 Vol.-% die mittlere Schichtdicke der gettermaterialhaltigen Schicht überschreiten. Dies führt zu einer rauen Oberfläche und kann die Verankerung der verschiedenen Schichten im Schichtverbund eines Liners verbessern oder aber die Trennkraft des Liners herabsetzen, da die Kontaktfläche mit der Klebemasse vermindert wird. Sind diese Partikel in der Trennschicht angeordnet, so sind sie in geringerem Maße mit dem Trennmaterial überdeckt, haben so nahezu unmittelbaren Kontakt zum Klebeband und können so noch effizienter Permeate binden. Besonders bevorzugt liegt das gesamte im erfindungsgemäß ausgerüsteten Liner enthaltene Gettermaterial in einer Partikelgrößenverteilung vor, bei der zumindest 10 Vol.-% die mittlere Schichtdicke der gettermaterialhaltigen Schicht überschreiten.

Geeignete Gettermaterialien sind beispielsweise: Salze wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Natriumsulfat, Kaliumdisulfit, Kaliumcarbonat, Magnesiumcarbonat; Schichtsilikate wie Montmorillonit und Bentonit; Metalloxide wie Bariumoxid, Calciumoxid, Eisenoxid, Magnesiumoxid, Natriumoxid, Kaliumoxid, Strontiumoxid, Aluminiumoxid (aktiviertes Alumina) und Titandioxid; weiter Kohlenstoffnanoröhrchen, Aktivkohle, Phosphorpentoxid und Silane; leicht oxidierbare Metalle wie beispielsweise Eisen, Calcium, Natrium und Magnesium; Metallhydride wie beispielsweise Calciumhydrid, Bariumhydrid, Strontiumhydrid, Natriumhydrid und Lithiumaluminiumhydrid; Hydroxide wie Kaliumhydroxid und Natriumhydroxid; Metallkomplexe wie zum Beispiel Aluminiumacetylacetonat; weiterhin Kieselsäuren wie zum Beispiel Silica-Gel; Kieselgur; Zeolithe; des Weiteren organische Absorber, beispielsweise Polyolefin-Copolymere, Polyamid-Copolymere, PET-Copolyester, Anhydride von einfachen und mehrfachen Carbonsäuren wie Essigsäureanhydrid, Propionsäureanhydrid, Buttersäureanhydrid oder Methyltetrahydrophtalsäureanhydrid oder weitere auf Hybridpolymeren basierte Absorber, die meist in Kombination mit Katalysatoren wie beispielsweise Cobalt verwendet werden; weitere organische Absorber wie etwa schwach vernetzte Polyacrylsäure, Polyvinylalkohol, Ascorbate, Glucose, Gallussäure oder ungesättigte Fette und Öle. Vorteilhaft eingesetzt, insbesondere für die Bindung von Sauerstoff, werden weiterhin metallorganische Oxidationsadditive auf der Basis chelatbildender Amine und Übergangsmetallkomplexe, insbesondere in Verbindung mit oxidierbaren Substratmaterialien.
Erfindungsgemäß können auch Mischungen aus zwei oder mehreren Gettermaterialien eingesetzt werden.

Die Gettermaterialien werden ihrer Funktion entsprechend bevorzugt als im Wesentlichen von Permeaten freie Materialien eingesetzt, zum Beispiel wasserfrei. Dies unterscheidet Gettermaterialien von ähnlichen Materialien, die als Füllstoff eingesetzt werden. So wird Silica zum Beispiel in Form von pyrogener Kieselsäure häufig als Füllstoff eingesetzt. Wird dieser Füllstoff jedoch wie üblich unter Umgebungsbedingungen gelagert, nimmt er bereits Wasser aus der Umgebung auf und ist nicht mehr in technisch nutzbarem Umfang als Gettermaterial funktionsfähig. Erst getrocknetes oder trocken gehaltenes Silica kann als Gettermaterial genutzt werden. Es ist erfindungsgemäß jedoch auch möglich, bereits teilweise mit Permeaten komplexierte Materialien zu verwenden, beispielsweise CaSO₄*1/2H₂O (Calciumsulfat-Halbhydrat) oder teilhydrierte Kieselsäuren, die per Definition als Verbindungen der allgemeinen Formel (SiO₂)ₘ*nH₂O vorliegen.

Unter "Silanen" werden Verbindungen der allgemeinen Formel Rₐ-Si-X₄₋ₐ oder deren partielle Kondensationsprodukte verstanden. In der Formel steht a für eine ganze Zahl von 0 bis 3 und bevorzugt für 0 oder 1. X steht für eine hydrolysierbare Gruppe, beispielsweise und bevorzugt für ein Halogen-Atom, insbesondere Chlor, eine Alkoxy-Gruppe wie beispielsweise eine Methoxy-, Ethoxy-, n-Propoxy-, iso-Propoxy-, n-Butoxy-, sec-Butoxy-oder tert-Butoxy-Gruppe oderfür eine Acetoxy-Gruppe. Weitere, dem Fachmann bekannte Beispiele für hydrolysierbare Gruppen sind im Sinne der vorliegenden Erfindung ebenfalls einsetzbar. Sind mehrere Substituenten X vorhanden, so können diese gleich oder voneinander verschieden sein. R steht für einen gegebenenfalls substituierten Kohlenwasserstoffrest, beispielsweise für eine Methyl-, Ethyl-, n-Propyl-, iso-Propyl-, n-Butyl-, sec-Butyl-, tert-Butyl-Gruppe, eine Pentyl-Gruppe sowie deren verzweigte Isomere, eine Hexyl-Gruppen sowie die verzweigten Isomere, eine Heptyl-Gruppe sowie die verzweigten Isomere, eine Octyl-Gruppe sowie die verzweigten Isomere, eine Nonyl-Gruppe sowie die verzweigten Isomere, eine Decyl-Gruppe sowie die verzweigten Isomere, eine Undecyl-Gruppe sowie die verzweigten Isomere, eine Dodecyl-Gruppe sowie die verzweigten Isomere, eine Tetradecyl-Gruppe sowie die verzweigten Isomere, eine Hexadecyl-Gruppe sowie die verzweigten Isomere, eine Octadecyl-Gruppe sowie die verzweigten Isomere oder eine Eicosyl-Gruppe sowie die verzweigten Isomere. Die Kohlenwasserstoffreste können zudem ringförmige und/oder aromatische Bauteile enthalten. Repräsentative Strukturen dafür sind Cyclohexyl-, Phenyl- und Benzyl-Gruppen. Gegebenenfalls enthält/enthalten der/die Kohlenwasserstoffrest(e) R beispielsweise einen oder mehrere Heteroatom-haltige Substituenten wie Aminogruppen, Aminoalkylgruppen, Glycidyloxygruppen, (Meth)acryloxygruppen und dergleichen. Sind mehrere Substituenten R vorhanden, so können diese gleich oder voneinander verschieden sein.

Ein als Gettermaterial einsetzbares Silan ist bevorzugt ausgewählt aus der Gruppe umfassend N-(2-Aminoethyl)-3-aminopropyltrimethoxysilan, N-(2-Aminoethyl)-3-aminopropyltriethoxysilan, 3-Aminopropyltrimethoxysilan, 3-Aminopropyltriethoxysilan, 3-Aminopropyldiethoxymethylsilan, N-(2-Aminoethyl)-3-aminopropyldimethoxymethylsilan, (N-Butyl)-3-aminopropyltrimethoxysilan, 3-(N-Ethylamino)-2-methylpropyltrimethoxysilan, 4-Amino-3,3-dimethylbutyltrimethoxysilan, 4-Amino-3,3-dimethylbutyldimethoxymethylsilan, (N-Cyclohexyl)-aminomethyldimethoxymethylsilan, (N-Cyclohexyl)-aminomethyltrimethoxysilan, (N-Phenyl)-3-aminopropyltrimethoxysilan, (N-Phenyl)-aminomethyldimethoxymethylsilan, (N-Benzyl-2-aminoethyl)-3-aminopropyltrimethoxysilan, [2-(N-Benzyl-N-vinylamino)-ethyl]-3-aminopropyltrimethoxysilan Hydrogenchlorid, [2-(N-Benzyl-N-vinylamino)-ethyl]-3-aminopropyltrimethoxysilan, Bis-(3-propyltriethoxysilyl)-amin, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan, 3-Triethoxysilylpropylbernsteinsäureanhydrid, 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltrimethoxysilan, 3-Methacryloyloxypropyltriethoxysilan, 3-Methacryloyloxypropyltriisopropoxysilan, 3-Methacryloyloxypropyldimethoxymethylsilan, 3-Methacryloyloxypropyldiethoxymethylsilan, 3-Chloropropyltrimethoxysilan, 3-Chloropropyltriethoxysilan, 3-Isocyanatopropyltrimethoxysilan, 3-Isocyanatopropyltriethoxysilan, Isocyanatomethyltrimethoxysilan, Isocyanatomethyldimethoxymethylsilan, Tris-[3-(trimethoxysilyl)-propyl]-isocyanurat, 3-Ureidopropyltrimethoxysilan, 3-Ureidopropyltriethoxysilan, 2-Hydroxy-4-(3-triethoxysilylpropoxy)-benzophenon, 4-(3'-Chlorodimethylsilylpropoxy)-benzophenon, 3-Mercaptopropyltrimethoxysilan, 3-Mercaptopropyldimethoxymethylsilan, Bis-(3-triethoxysilylpropyl)-disulfan, Bis-(3-triethoxysilylpropyl)-tetrasulfan, Bis-(triethoxysilylpropyl)-polysulfan und Octadecylaminodimethyltrimethoxysilylpropylammoniumchlorid.

Bevorzugt ist das Gettermaterial ausgewählt aus der Gruppe umfassend Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Natriumsulfat, Kaliumcarbonat, Magnesiumcarbonat sowie
Kieselgur, Kieselsäuren (Silica), Zeolithe, Schichtsilikate sowie
Eisen, Calcium, Natrium, Magnesium, Bariumoxid, Calciumoxid, Eisenoxid, Magnesiumoxid, Natriumoxid, Titandioxid, Kaliumoxid, Strontiumoxid, aktiviertes Aluminiumoxid sowie
Kohlenstoffnanoröhrchen, Aktivkohle, Phosphorpentoxid, Silane sowie
Calciumhydrid, Bariumhydrid, Strontiumhydrid, Natriumhydrid und Lithiumaluminiumhydrid, Kaliumhydroxid, Natriumhydroxid sowie Aluminiumacetylacetonat sowie
Polyolefin-Copolymere, Polyamid-Copolymere, PET-Copolyester,
Essigsäureanhydrid, Propionsäureanhydrid, Buttersäureanhydrid, Methyltetrahydrophthalsäureanhydrid,
Polyacrylsäure und Polyvinylalkohol, da diese Materialien sich gut als Wassergetter eignen.

Für das Binden von Sauerstoff ist das Gettermaterial bevorzugt ausgewählt aus der Gruppe umfassend Eisen, Natriumdithionit, Bariumoxid, Eisen(II,III)-Oxid, Carbohydrazid, aktiviertes Aluminiumoxid, Zeolith, Aktivkohle, Sulfite, Ascorbate, Hydrazin, Morpholin, 2-Butanonoxim, Diethylhydroxylamin, Glucose, Gallussäure, ungesättigte Fette und Öle, metallorganische Oxidationsadditive auf der Basis chelatbildender Amine und Übergangsmetallkomplexe, insbesondere in Verbindung mit oxidierbaren Substratmaterialien.

Besonders bevorzugt ist das Gettermaterial ausgewählt aus der Gruppe umfassend Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Natriumsulfat, Kaliumcarbonat, Zeolithe, Calcium, Magnesium, Bariumoxid, Calciumoxid, Magnesiumoxid, Natriumoxid, Kaliumoxid, Strontiumoxid, Aktivkohle, Phosphorpentoxid, Silane, Calciumhydrid, Bariumhydrid, Strontiumhydrid, Natriumhydrid und Lithiumaluminiumhydrid, Kaliumhydroxid, Natriumhydroxid, Essigsäureanhydrid, Propionsäureanhydrid, Buttersäureanhydrid, Methyltetrahydrophtalsäureanhydrid und Carbodiimide sowie Mischungen von zwei oder mehreren der vorstehenden Substanzen. Diese Materialien weisen eine hohe Sorptionskapazität gegenüber mindestens einem der oben genannten Permeate und insbesondere auch gegenüber Wasser auf.

Unter "Carbodiimiden" werden Verbindungen der allgemeinen Formel R¹-N=C=N-R² verstanden, wobei R¹ und R² organische Reste, insbesondere Alkyl- oder Arylreste sind, die gleich oder verschieden sein können.

Ganz besonders bevorzugt ist das Gettermaterial ausgewählt aus der Gruppe umfassend Calciumchlorid, Calciumoxid, Bortrioxid, Natriumsulfat, Kaliumcarbonat, Kupfersulfat, Magnesiumperchlorat, Magnesiumsulfat und Zeolithe sowie Mischungen von zwei oder mehreren der vorstehenden Substanzen. Diese Gettermaterialien bieten den Vorteil, dass sie sich leicht in die betreffende Schicht des Liners einarbeiten lassen, ein hohes Sorptionsvermögen zeigen und regenerierbare Gettermaterialien sind. Darunter werden Substanzen verstanden, die aufgenommene Permeate, beispielsweise Wasser, unter bestimmten Bedingungen wieder abgeben können und dadurch in einen Zustand gelangen, der sie zu erneuter Permeataufnahme befähigt. Dies ermöglicht ein Verfahren, bei dem der Getter-haltige Liner vor dem Inkontaktbringen mit der Klebemasse von gegebenenfalls bis zu diesem Zeitpunkt aufgenommenen Permeaten weitgehend befreit wird, beispielsweise durch Trocknen. Dadurch steht vorteilhaft bei Verwendung des Liners die volle Getterkapazität zur Verfügung.

Insbesondere ist das Gettermaterial ausgewählt aus Calciumoxid, Calciumsulfat, Calciumchlorid und Zeolithen sowie aus Mischungen von zwei oder mehreren der vorstehenden Substanzen. Diese Materialien weisen besonders hohe Kapazitäten für die Aufnahme von Wasser und weiteren Permeaten auf, sind größtenteils regenerierbar, lassen sich hervorragend in den Liner, beispielsweise in die Trägerschicht oder in die abhäsive Trennschicht, einarbeiten und beeinträchtigen die Funktion dieser Schichten gar nicht beziehungsweise nur in vernachlässigbarer Art und Weise.

In einer besonderen Ausführungsform der Erfindung ist das Gettermaterial ausgewählt aus Calciumoxid, Calcium, Eisen, Barium, Lithiumchlorid und Cobaltchlorid. Diese Substanzen lassen über eine Änderung ihrer optischen Eigenschaften Rückschlüsse auf den Permeatgehalt der Klebemasse zu, indem sie beispielsweise mit zunehmender Wasseraufnahme eine Änderung von weiß zu einem transparenten Erscheinungsbild vollziehen. So lange also noch freie Getterkapazität anhand des optischen Erscheinungsbildes des Liners erkennbar ist, kann dies als Indiz dafür gelten, dass noch kein oder allenfalls wenig Permeat in die zu schützende Klebemasse diffundiert ist. Metallisches Calcium beispielsweise verliert seine metallisch-undurchsichtige Erscheinung und wird zunehmend transparent; Cobaltchlorid ändert seine Farbe bei Wasseraufnahme von blau zu rosa. Insbesondere ist das Gettermaterial Calciumoxid.

In einer weiteren bevorzugten Ausführung bindet das Gettermaterial das Permeat durch Chemisorption. Dieser Prozess läuft aufgrund der in der Regel höheren Aktivierungsenergie langsamer ab als die Physisorption. Ein bekanntes Beispiel ist hier Calciumoxid, welches durch den Permeat Wasser in Calciumhydroxid umgewandelt wird. Durch die langsamere Umsetzung ergibt sich die Möglichkeit, das Gettermaterial kurzzeitig an Umgebungsatmosphäre handzuhaben, ohne dass bereits ein wesentlicher Teil der Aufnahmekapazität verloren geht.

Bevorzugt ist das Gettermaterial molekular in dem Matrixmaterial dispergiert, da hierdurch sowohl Transparenz als auch die Oberflächenrauheit im Vergleich zu Partikeln weniger beeinträchtigt werden. Hierfür werden insbesondere Metallkomplexe und organische Metallverbindungen eingesetzt, bevorzugt solche organometallischen Lewissäuren, die bei einer Reaktion mit Wasser keinen Alkohol bilden. Dies ist bevorzugt, da der Alkohol ähnlich wie Wasser eine Degradation des organischen elektronischen Aufbaus bewirken kann. Beispiele für solche Verbindungen sind AlC₂H₅)₃, Al(C₄H₉)₃, B(C₄H₉)₃, Zn(C₄H₉)₂, Al(t-butyl)₃, Ti(t-butyl)₄, Mg(t-butyl)₂, Al(C4H₉)₂(N(CeH₅)₂), Al(C₄H₉)(N(C₆H₅)₂)₂ sowie weitere Beispiele, wie sie in US2006/0087230 beschrieben werden.

Weiterhin wird ein Gettermaterial bevorzugt, welches bereits bei niedriger Permeatkonzentration eine hohe Wirksamkeit besitzt. Für das Permeat Wasser werden demgemäß bevorzugt solche Gettermaterialien eingesetzt, über deren gesättigter wässriger Lösung sich bei 20°C und einem Luftdruck von 1013 mbar eine relative Luftfeuchte von weniger als 20 % einstellt. Unter dem Aspekt der Wirksamkeit bei niedriger Permeatkonzentration ist das Gettermaterial bevorzugt ausgewählt aus der Gruppe umfassend Natriumhydroxid, Kaliumhydroxid, Lithiumbromid, Zinkbromid, Lithiumchlorid, Calciumbromid, Lithiumjodid und Calciumacetat.

Bevorzugt enthält der Liner Gettermaterial in der abhäsiven Trennschicht. In diesem Fall befindet sich das in der Trennschicht enthaltene Gettermaterial in unmittelbarer Nähe der zu schützenden Klebemasse und kann so eventuell in der Trennschicht selbst enthaltene Permeate, zwischen Klebemasse und Liner eingeschlossene Permeate und in der Klebemasse noch enthaltene Permeate wirksamer binden. Überraschend zeigte sich, dass trotz der Füllung des Trennmaterials mit dem Gettermaterial die abhäsiven Eigenschaften nur in vernachlässigbarem Maße beeinflusst wurden. Besonders bevorzugt enthält der Liner das gesamte Gettermaterial in der abhäsiven Trennschicht.

In einer bevorzugten Ausführungsform enthält der Liner Gettermaterial in der abhäsiven Trennschicht, und das in der abhäsiven Trennschicht enthaltene Gettermaterial weist eine mittlere Partikelgröße von weniger als 500 nm auf. Dies ist vorteilhaft, weil in diesem Fall die abhäsiven Eigenschaften am geringsten beeinträchtigt werden sowie eine gegebenenfalls gewünschte Transparenz besser erhalten bleibt. Weiterhin ergibt sich eine besonders glatte Trennschichtoberfläche, so dass während der Lamination auf beispielsweise eine Klebebandoberfläche weniger Permeate aus der Umgebungsluft eingeschlossen werden. Besonders bevorzugt weist das in der abhäsiven Trennschicht enthaltene Gettermaterial eine mittlere Partikelgröße von weniger als 200 nm auf. In diesem Fall sind die vorstehend aufgeführten Eigenschaften nochmals verbessert ausgeprägt.

In einer weiteren bevorzugten Ausführungsform enthält der Liner Gettermaterial in der abhäsiven Trennschicht, und das in der abhäsiven Trennschicht enthaltene Gettermaterial weist eine mittlere Partikelgröße zwischen 500 nm und 50µm auf. Dies ist vorteilhaft, weil in diesem Fall der eingebrachte Getter der Trennschicht eine raue Oberfläche verleihen kann, was die Kontaktfläche zwischen Klebemasse und Liner verringert und die Trenneigenschaften positiv beeinflusst. Dies gilt in besonderem Maße für Silikon-basierte Trennschichten. Besonders bevorzugt weist der Liner daher eine Gettermaterial enthaltende abhäsive Silikon-Trennschicht auf, und das in der abhäsiven Trennschicht enthaltene Gettermaterial weist eine mittlere Partikelgröße zwischen 500 nm und 50 µm auf.

Um die Bindungskapazität einer mit Gettermaterial gefüllten Trennschicht zu erhöhen, ist es vorteilhaft, deren Schichtdicke über das für die Trennwirkung in der Regel verwendete Maß hinaus zu erhöhen. Eine vorteilhafte Schichtdicke der Getter-gefüllten Trennschicht liegt zwischen 5 µm und 10 µm, da hierbei der Verbrauch des Trennmaterials und somit Kosten gering gehalten werden können. Besonders vorteilhaft ist jedoch eine Schichtdicke zwischen 10 µm und 100 µm, da hierbei die Bindungskapazität für Permeate stark erhöht werden kann.

Bevorzugt enthält die abhäsive Trennschicht 0,5 bis 10 Gew.-% Gettermaterial, bezogen auf das Gesamtgewicht der abhäsiven Trennschicht. Es hat sich gezeigt, dass in diesem Anteilsbereich zum einen gute Getterkapazitäten realisiert werden können und zum anderen die Trenneigenschaften der Schicht höchstens unerheblich beeinflusst werden.

In einer weiteren bevorzugten Ausführungsform enthält der Liner Gettermaterial in der Trägerschicht. Besonders bevorzugt enthält der Liner das gesamte Gettermaterial in der Trägerschicht. In diesem Falle wird vorteilhaft ausgeschlossen, dass die Trennschicht in ihrer Wirksamkeit beeinträchtigt wird. Vorzugsweise enthält die Trägerschicht 5 bis 20 Gew.-% Gettermaterial, bezogen auf das Gesamtgewicht der Trägerschicht. Dies ist vorteilhaft, weil die Exposition der Trägerschicht zur Umgebung direkter ist als beispielsweise die der Trennschicht und somit eine größere Menge Permeaten auf das Trägermaterial einwirken kann.

Das Gettermaterial kann auch in einer eigens für die Aufnahme des Gettermaterials vorgesehen Schicht im Lineraufbau dispergiert sein, die weder als Trennschicht noch als Trägerschicht fungiert. Dies kann zum Beispiel eine Lackschicht oder Druckfarbe sein, in der der Getter dispergiert vorliegt. Geeignet ist aber auch eine saugfähige Schicht wie beispielsweise ein textiles Flächengebilde, die mit einem fluiden Gettermaterial getränkt ist.

In einer speziellen Ausführungsform der erfindungsgemäßen Verwendung enthält der Liner eine Trägerschicht sowie eine zwischen Trägerschicht und abhäsiver Trennschicht angeordnete Zwischenschicht, wobei das Gettermaterial in der Zwischenschicht enthalten ist. Dies hat den Vorteil, dass sowohl die Trägerschicht als auch die Trennschicht hinsichtlich ihrer Träger- beziehungsweise Trenneigenschaften optimiert ausgebildet werden können und nicht durch Getterteilchen in ihren Funktionen beeinträchtigt werden.

Bevorzugt enthält die Zwischenschicht einen Klebstoff als kontinuierliche Phase. "Kontinuierliche Phase" bezeichnet in diesem Zusammenhang das Material der betreffenden Schicht, in dem die Getterteilchen dispergiert sind. Mit dem Klebstoff als kontinuierlicher Phase der Zwischenschicht kann im Lineraufbau vorteilhaft beispielsweise ein Verbund zwischen Trennschicht und Trägerschicht oder weiteren Schichten des Liners hergestellt werden.

Die das Gettermaterial enthaltende Zwischenschicht kann diskontinuierlich, also durchbrochen, gestaltet sein, etwa aus Kalotten oder einem Raster, wobei der Getter im Klebstoffmaterial der Kalotten oder des Rasters dispergiert ist. Eine durchbrochene Schicht hat den Vorteil, dass zugelassene Permeate die Schicht leichter passieren können, zu bindende Permeate aber abgefangen werden.

Besonders bevorzugt enthält der Liner eine weitere Trägerschicht, und die das Gettermaterial enthaltende Zwischenschicht ist zwischen den beiden Trägerschichten angeordnet, wobei ganz besonders bevorzugt die Zwischenschicht einen Klebstoff als kontinuierliche Phase enthält.

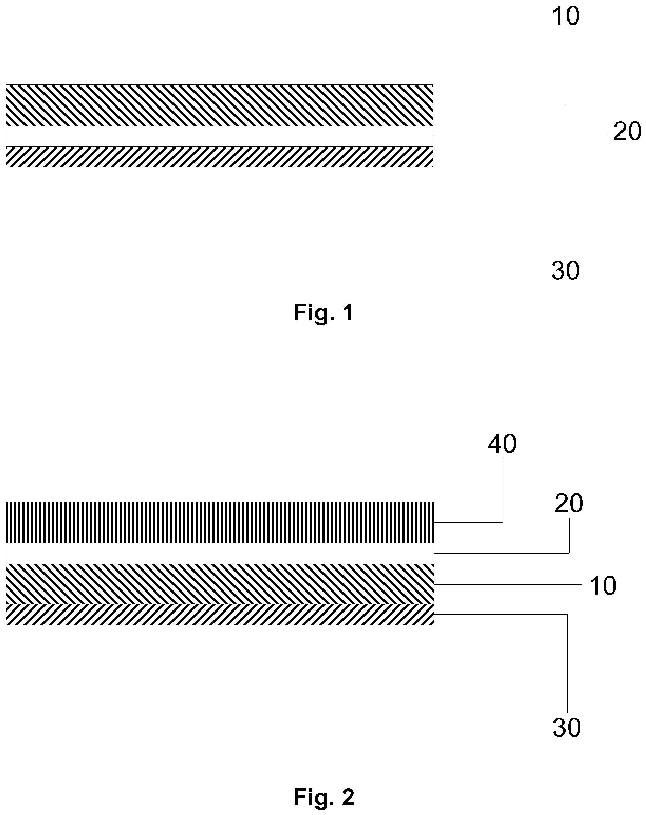

Aufbauten eines Liners mit einer das Gettermaterial enthaltenden Zwischenschicht sind beispielhaft in den Figuren 1 und 2 dargestellt. Dabei haben die Bezugsziffern folgende Bedeutung:
- 10:: Trägerschicht
- 20:: mit Gettermaterial gefüllte Zwischenschicht, bevorzugt mit Klebstoff als kontinuierlicher Phase
- 30:: abhäsive Trennschicht
- 40:: weitere Trägerschicht

In der Auswahl des Klebstoffs beziehungsweise der Klebemasse, der/die bevorzugt die kontinuierliche Phase der Zwischenschicht bildet, bestehen keine prinzipiellen Einschränkungen. Bevorzugt werden jedoch Laminierklebstoffe eingesetzt. Besonders bevorzugt ist der Klebstoff eine Haftklebemasse oder eine aktivierbare Klebemasse oder eine aktivierbare Haftklebemasse.

Flüssigklebstoffe sind ebenfalls einsetzbar. Es kommen die hinlänglich bekannten ein- und zweikomponentigen Reaktivklebstoffe in Frage, und zwar sowohl thermisch härtbare als auch strahlenhärtbare Systeme.

Vorzugsweise hat die Klebemasse eine geringe Permeationsrate für das zu immobilisierende Permeat. Im Fall von Wasserdampf als Permeat beträgt die Wasserdampfpermeationsrate (WVTR) bevorzugt weniger als 100 g/(m²*d), besonders bevorzugt weniger als 50 g/(m²*d), bezogen auf eine Klebemassendicke von 50 µm. Die WVTR wird dabei bei 38°C und 90% relativer Luftfeuchtigkeit nach ASTM F-1249 gemessen. Dies ermöglicht eine Herstellung der Klebemasseschicht und Lamination des Linerverbunds unter üblichen Umgebungsbedingungen, ohne dass sich das Gettermaterial mit dem Permeat bereits zu einem großen Teil absättigt.

Kommt eine Haftklebemase zum Einsatz, besteht die Polymerbasis bevorzugt aus Polyacrylat, Polyester, Polycarbonat, Naturkautschuk und/oder Synthesekautschuk, besonders bevorzugt aus Syntheskautschuk, insbesondere auf der Basis von Styrol-Blockcopolymeren.

Vorzugsweise hat in einem Aufbau, der ein erstes und ein weiteres Trägermaterial enthält, das näher am Permeat liegende Trägermaterial eine hohe Permeationsrate für das zu immobilisierende Permeat, damit dieses schnell zur das Gettermaterial enthaltenden Zwischenschicht permeieren kann. Im Fall von Wasserdampf als Permeat beträgt die Wasserdampfpermeationsrate (WVTR) bevorzugt mehr als 50 g/(m²*d), besonders bevorzugt mehr als 200 g/(m²*d), bezogen auf die Trägermaterialdicke. Die WVTR wird dabei bei 38°C und 90% relativer Luftfeuchtigkeit nach ASTM F-1249 gemessen. Dementsprechend sind beispielsweise Polymerfolien aus polaren Copolymeren des Ethylens wie Ethylenvinylacetat, Polyurethanen, Celluloseacetaten, Polymethylmethacrylaten oder Polyvinylalkoholen als Material des näher am Permeat angeordneten Trägers besonders geeignet. Auch Membranen, die einen Permeattransport durch ihre Porosität oder Perforation ermöglichen, wie zum Beispiel Papier oder mikroperforierte Polyethylenfolien aus dem Hygieneartikelbereich, sind gut geeignet.

In einem solchen Aufbau ist es weiterhin bevorzugt, dass zumindest eine - bevorzugt beide - der beiden Trägerschichten einen geringen Gehalt an Permeat aufweist. Hierdurch wird eine wesentliche Absättigung des Gettermaterials durch den im Trägermaterial enthaltenen Permeaten vermieden, so dass genügend Kapazität zum Schutz der vor Permeat zu schützenden Klebemasse bereitsteht. Bevorzugt weist zumindest eine der beiden Trägerschichten - besonders bevorzugt beide Trägerschichten - vor der Benutzung des erfindungsgemäß ausgerüsteten Liners einen Permeatgehalt von weniger als 5000 ppm, besonders bevorzugt von weniger als 1000 ppm auf. Die Angabe ppm bezieht sich dabei auf die Relation des enthaltenen Gesamtgewichts an Permeaten zum Gesamtgewicht der betreffenden Trägerschicht. Der Permeatgehalt kann mittels Gaschromatographie nach VDA 277 bestimmt werden oder im Fall von Wasser nach DIN EN ISO 62 (gravimetrisches Verfahren, Methode 4) oder DIN 53715 (Karl-Fischer-Titration) nach Lagerung des Prüflings über 24 Stunden bei 23°C und 50 % relativer Luftfeuchte.

In einer weiteren bevorzugten Ausführungsform weist das Material der abhäsiven Trennschicht eine Permeatendurchlässigkeit insbesondere für Wasserdampf von mindestens 100 g/(m²*d) auf, besonders bevorzugt von mindestens 500 g/(m²*d), jeweils bezogen auf eine Schichtdicke von 50 µm. Die Durchlässigkeit beziehungsweise Permeationsbarriere gegen Wasserdampf (WVTR) wird bei 38°C und 90 % relativer Luftfeuchtigkeit nach ASTM F-1249 gemessen, die Permeationsbarriere gegen Sauerstoff bei 23°C und 50 % relativer Luftfeuchtigkeit nach DIN 53380-Teil 3. Unter dem Material der abhäsiven Trennschicht wird hier das reine Trennschichtmaterial ohne einen möglichen Getterzusatz verstanden. Die angegebene Permeatendurchlässigkeit des Trennschichtmaterials ist insofern vorteilhaft, als der Permeat besonders schnell und effektiv zum Gettermaterial gelangt, insbesondere von Seiten der Klebemasse. Besonders bevorzugt wird daher eine auf Silikon oder Acrylat basierende Trennschicht eingesetzt.

Das Einbringen des Gettermaterials oder der Gettermaterialien in die betreffende(n) Schicht(en) kann durch sämtliche dem Fachmann bekannte Verfahren erfolgen. Dabei kann das Schichtmaterial, beispielsweise das Trennschichtmaterial oder das Trägerschichtmaterial in Lösung, Dispersion, Schmelze oder als Fluid vorliegen.

Der Gesamtgehalt des Liners an Gettermaterial im Rahmen der erfindungsgemäßen Verwendung kann von 0,5 bis 95 Gew.-%, bezogen auf das Gesamtgewicht der Gettermaterial-haltigen Schichten, betragen. Der Gehalt hängt wesentlich von der gewünschten Aufnahmekapazität für den/die jeweiligen Permeaten ab.

Wenn zum Beispiel nur eine geringe Aufnahmekapazität erforderlich ist, reicht gegebenenfalls die Verwendung eines Gettermaterials mit geringer Aufnahmekapazität in einem geringen Gehalt aus. In einer bevorzugten Ausführungsform enthält der Liner daher 0,5 bis 5 Gew.-% Gettermaterial, bezogen auf das Gesamtgewicht der Gettermaterialhaltigen Schichten des Liners. Die Dicke und die Fläche der trockenmittelhaltigen Matrix können in diesem Fall vorteilhaft an den jeweiligen Untergrenzen liegen.

Bei einer sehr hohen erforderlichen Aufnahmekapazität des Liners muss jedoch eine Gettermaterial enthaltende Matrix mit relativ hohem Gehalt an Gettermaterial verwendet werden, wobei auch das Gettermaterial eine hohe Aufnahmekapazität besitzen sollte. Aber auch ein Gettermaterial mit geringer Aufnahmekapazität kann verwendet werden, wenn dies Kosten- oder Verträglichkeitsaspekte anraten. Im Rahmen einer weiteren bevorzugten Ausführungsform enthält der Liner daher 60 bis 95 Gew.-% Gettermaterial, bezogen auf das Gesamtgewicht der Gettermaterial-haltigen Schichten des Liners.

Es wird ein Gettermaterial mit hoher Aufnahmekapazität (maximal aufnehmbares Permeatgewicht > 25 % des Gettergewichts) bevorzugt, da hiermit der Gehalt an Getter gering gehalten werden kann. Die Aufnahmekapazität wird dabei nach Lagerung des Gettermaterials über 100 h bei 23 °C und 50 % relativer Luftfeuchte für das Permeat Wasserdampf oder bei 23 °C in gesättigter Atmosphäre bei anderen gasförmigen Permeaten ermittelt. Der Permeatgehalt des Getters nach Lagerung kann gravimetrisch bestimmt werden. Unter dem Aspekt der Aufnahmekapazität ist das Gettermaterial bevorzugt ausgewählt aus der Gruppe umfassend Kupfersulfat, Calciumoxid und Calciumchlorid.

In einer bevorzugten Ausführungsform besteht der Liner aus einer Trägerschicht und einer abhäsiven Trennschicht, enthält also ausschließlich diese beiden Schichten. Dies ist vorteilhaft, weil ein solcher Liner flexibler als ein mehrschichtiger Liner ist und die Verankerung zwischen den beiden Schichten sich einfacher erzielen lässt als bei einem mehrschichtigen Liner. Darüber hinaus kann ein derartiger Liner mit einem geringeren Materialeinsatz hergestellt werden. Gegenüber einem nur aus der Trennschicht bestehenden Liner besitzt diese Ausführungsform den Vorteil, dass die Trennfunktion und die mechanische Stabilisierungsfunktion in zwei Schichten entkoppelt vorliegen und somit jeweils besonders geeignete Materialien ausgewählt werden können.

In einer weiteren bevorzugten Ausführungsform besteht der Liner aus einer Trägerschicht, einer abhäsiven Trennschicht und einer zwischen Träger- und Trennschicht angeordneten Primerschicht. Bevorzugt enthält die Primerschicht (auch) Gettermaterial. Besonders bevorzugt enthält die Primerschicht das gesamte im Liner enthaltene Gettermaterial und ist somit als die alleinige Gettermaterial enthaltende Schicht im Liner ausgeführt.

Bevorzugt ist der erfindungsgemäß ausgerüstete Liner transparent, das heißt die Transmission gemessen nach ASTM D1003-00 (Procedure A) ist größer als 50 %, bevorzugt größer als 75 %. Mit einem transparenten Liner kann das Klebeband in der Anwendung leichter positioniert werden.

Besonders bevorzugt ist der erfindungsgemäß ausgerüstete Liner UV-Licht undurchlässig, das heißt die Transmission in einem Wellenlängenbereich von 200 bis 400 nm, gemessen nach ASTM D1003-00 (Procedure B), ist geringer als 25 %, bevorzugt geringer als 10 %. Mit einem UV-undurchlässigen Liner kann die Klebemasse vor Veränderungen (zum Beispiel chemische Reaktionen, Alterung, Vernetzung) durch den Einfluss von UV-Licht geschützt werden.

Ein weiterer Gegenstand der vorliegenden Erfindung ist eine Klebemasse, die zumindest einseitig und zumindest partiell mit einem erfindungsgemäß ausgerüsteten Liner bedeckt ist. Die Klebemasse ist bevorzugt eine Haftklebemasse oder eine aktivierbare Klebemasse und insbesondere eine aktivierbare Haftklebemasse.

Als Haftklebemassen werden Klebemassen bezeichnet, deren abgebundener Film bei Raumtemperatur in trockenem Zustand permanent klebrig und klebfähig bleibt. Haftklebemassen erlauben bereits unter relativ schwachem Andruck eine dauerhafte Verbindung mit dem Haftgrund und können nach Gebrauch im Wesentlichen rückstandsfrei vom Haftgrund wieder abgelöst werden. Die Verklebbarkeit der Klebemassen beruht auf ihren adhäsiven Eigenschaften und die Wiederablösbarkeit auf ihren kohäsiven Eigenschaften.

Erfindungsgemäß können alle dem Fachmann bekannten Haftklebemassen eingesetzt werden, also beispielsweise solche auf der Basis von Acrylaten und/oder Methacrylaten, Polyurethanen, Naturkautschuken, Synthesekautschuken; Styrolblockcopolymermassen mit einem Elastomerblock aus ungesättigten oder hydrierten Polydienblöcken wie zum Beispiel Polybutadien, Polyisopren, Copolymere aus beiden sowie weitere, dem Fachmann geläufige Elastomerblöcke; Polyolefinen, Fluorpolymeren und/oder Silikonen.

Werden im Rahmen dieser Schrift Haftklebemassen auf Acrylatbasis erwähnt, so seien hiervon auch ohne explizite Erwähnung Haftklebemassen auf Basis von Methacrylaten und auf Basis von Acrylaten und Methacrylaten umfasst, sofern nicht ausdrücklich anders beschrieben. Ebenfalls im Sinne der Erfindung sind Kombinationen und Mischungen mehrerer Basispolymere sowie mit Klebharzen, Füllstoffen, Alterungsschutzmitteln und Vernetzern additivierte Klebemassen einsetzbar, wobei die Aufzählung der Additive nur beispielhaft und nicht einschränkend zu verstehen ist.

Bevorzugt werden Haftklebstoffe auf der Basis von Styrolblockcopolymeren, Polybutylenen, Polyolefinen oder Fluorpolymeren, da sich diese durch eine hohe Permeationsbarriere gegen Wasserdampf sowie einen geringen Gehalt an Wasser auszeichnen.

Als aktivierbare Klebemassen werden Klebemassensysteme angesehen, bei denen die Verklebung durch einen Energieeintrag, zum Beispiel durch aktinische Strahlung oder Wärme, erfolgt.

Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Ebenfalls umfasst sind solche Klebemassen, die sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, die bei einem Erwärmen reversibel erweichen und während des Erkaltens wieder erstarren. Als thermoplastische Klebemassen haben sich insbesondere solche auf der Basis von Polyolefinen und Copolymeren von Polyolefinen sowie von deren säuremodifizierten Derivaten, von lonomeren, von thermoplastischen Polyurethanen, von Polyamiden sowie Polyestern und deren Copolymeren und auch von Blockcopolymeren wie Styrol-Blockcopolymeren als vorteilhaft herausgestellt.

Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, zum Beispiel synthetische Nitrilkautschuke oder Stryrolblockcopolymere. Derartige elastische Komponenten verleihen der hitzeaktiviert verklebenden Klebemasse infolge ihrer hohen Fließviskosität eine auch unter Druck besonders hohe Dimensionsstabilität.

Strahlungsaktivierte Klebemassen basieren ebenfalls auf reaktiven Komponenten. Letztere Bestandteile können zum Beispiel Polymere oder Reaktivharze umfassen, in denen durch die Bestrahlung ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, wie sie oben ausgeführt sind.

Bevorzugt werden aktivierbare Klebemassen auf der Basis von Epoxiden, Oxetanen, (Meth)-Acrylaten oder modifizierten Styrolblockcopolymeren, eingesetzt.

Grundsätzlich sind jedoch alle im Stand der Technik bekannten filmförmig ausgestaltbaren Klebemassen geeignet, die zur Versiegelung empfindlicher elektronischer Anordnungen beschrieben werden. Bevorzugt weist die Klebemasse vor dem Inkontaktbringen mit dem erfindungsgemäß ausgerüsteten Liner einen Permeatgehalt von weniger als 1000 ppm, besonders bevorzugt von weniger als 100 ppm auf. Die Angabe ppm bezieht sich dabei auf die Relation des enthaltenen Gesamtgewichts an Permeaten zum untersuchten Klebemassegewicht. Der Permeatgehalt kann mittels der Gaschromatographie nach VDA 277 bestimmt werden oder im Fall von Wasser nach DIN EN ISO 62 (gravimetrisches Verfahren, Methode 4) oder DIN 53715 (Karl-Fischer-Titration) nach Lagerung des Prüflings über 24 Stunden bei 23°C und 50 % relativer Luftfeuchte. Bei den hier beschriebenen Permeatgehalten der Klebemasse wird die Kapazität der Gettermaterialien des Liners nicht so stark durch aus der Klebemasse diffundierende Permeate beansprucht, sondern der Liner kann seine Funktion als vor Permeaten aus der Umgebung schützende Abdeckung besser erfüllen.

Vorzugsweise hat die Klebemasse eine geringe Permeationsrate für das zu immobilisierende Permeat. Im Fall von Wasserdampf als Permeat beträgt die Wasserdampfpermeationsrate (WVTR) bevorzugt weniger als 50 g/m² day, besonders bevorzugt weniger als 20 g/m² day bezogen auf eine Klebemassedicke von 50 µm. Die WVTR wird dabei bei 38°C und 90% relativer Luftfeuchtigkeit nach ASTM F-1249, die Sauerstoffpermeationsrate (OTR) bei 23°C und 50% relativer Luftfeuchtigkeit nach DIN 53380-Teil 3 gemessen.

Durch die geringe Permeationsrate der Klebemasse diffundiert weniger Permeat aus der Umgebung durch die Klebemasse hindurch in den gettermaterialhaltigen Liner, der somit seine Funktion länger erfüllen oder mit einer geringeren Menge an Gettermaterial ausgerüstet werden kann, was den Materialeinsatz verringert und Kosten spart. Bevorzugt ist die erfindungsgemäße Klebemasse als Klebeband ausgebildet. Das Klebeband umfasst also zumindest eine Schicht einer Haftklebemasse oder einer aktivierbaren Klebemasse oder insbesondere einer aktivierbaren Haftklebemasse. Das Klebeband kann auch weitere Schichten enthalten, zum Beispiel eine oder mehrere weitere Klebemasseschichten oder ein Trägermaterial.
Bevorzugt enthält das Klebeband nur eine Schicht einer Klebemasse (Transferklebeband), da hierdurch der Aufbau einfach gehalten und die Zahl der zu berücksichtigenden möglichen Permeate durch die geringere Materialvielfalt klein gehalten werden kann. Ferner behindert kein Trägermaterial die Diffusion von Permeaten aus dem Klebeband zum Getter-haltigen Liner, wodurch das Klebeband besonders effizient von Permeaten befreit werden kann.
Die Dicke des Klebebands kann alle üblichen Dicken umfassen, also etwa von 3 µm bis zu 3000 µm. Bevorzugt wird eine Dicke zwischen 25 und 100 µm, da in diesem Bereich Klebkraft und Handlingeigenschaften besonders positiv ausfallen. Ein weiterer bevorzugter Bereich ist eine Dicke von 3 bis 25 µm, da in diesem Bereich die Menge von durch die Klebefuge permeierenden Stoffen allein durch die kleine Querschnittsfläche der Klebefuge in einer Verkapselungsanwendung gering gehalten werden kann. Weiterhin hat sich überraschend gezeigt, dass solche geringen Klebebanddicken durch den Getter-gefüllten Liner gut von Permeaten befreit werden können.
Besonders bevorzugt werden Transferklebebänder, da hierbei kein Trägermaterial die Diffusion von Permeaten aus dem Klebeband zum Getter-haltigen Liner behindert und so das Klebeband besonders effizient von Permeaten befreit werden kann.

Ein weiterer Gegenstand der vorliegenden Offenbarung ist ein Verfahren zum Schützen einer Klebemasse vor Permeaten, das das zumindest einseitige und zumindest partielle Bedecken der Klebemasse mit einem erfindungsgemäß ausgerüsteten Liner umfasst.

Zur Herstellung eines Verbundes aus beispielsweise einem Klebeband und einem erfindungsgemäß ausgerüsteten Liner wird der Träger des Klebebands oder der Liner einseitig mit dem bevorzugten Haftkleber des Klebebands aus Lösung oder Dispersion oder 100 %ig (zum Beispiel Schmelze) beschichtet oder bedruckt, oder der Verbund wird durch Coextrusion hergestellt. Alternativ ist eine Verbundbildung durch Transfer einer Klebemasse-Schicht beziehungsweise eines Liners durch Kaschieren möglich. Die Klebemasseschicht(en) können durch Wärme oder energiereiche Strahlen vernetzt werden.
Bevorzugt findet dieser Prozess in einer Umgebung statt, in der das spezifische Permeat nur in geringer Konzentration oder nahezu gar nicht enthalten ist. Als Beispiel kann eine relative Luftfeuchtigkeit von weniger als 30 %, bevorzugt von weniger als 15 % genannt werden.
Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutzmitteln, Alterungsschutzmitteln, Vernetzungsmitteln, Vernetzungspromotoren oder Elastomeren abgemischt sein.
Die Menge der Klebstoffschicht beträgt bevorzugt 10 bis 120 g/m², vorzugsweise 25 bis 100 g/m², wobei unter "Menge" die Menge nach einer eventuell durchgeführten Entfernung von Wasser oder Lösungsmittel verstanden wird.
Selbstverständlich kann eine zu schützende Klebemasse auch beidseitig mit einem erfindungsgemäß ausgerüsteten Liner ausgerüstet sein.

Ein weiterer Gegenstand der vorliegenden Offenbarung ist die Verwendung eines erfindungsgemäß ausgerüsteten Liners zum zumindest einseitigen und zumindest partiellen Bedecken eines Klebebandes in Verfahren zur Verkapselung optoelektronischer Bauelemente und/oder einer aerob härtenden Klebemasse und/oder einer feuchtigkeitshärtenden Klebemasse.

Ein weiterer Gegenstand der vorliegenden Offenbarung ist die Verwendung des erfindungsgemäß ausgerüsteten Liners, der bevorzugt Calciumoxid, metallisches Calcium und/oder Cobaltchlorid als Gettermaterial enthält, zur Indikation des Permeatgehalts einer mit dem Liner bedeckten Klebemasse. Diese Indikation wird durch eine Änderung der optischen Eigenschaften des im Liner enthaltenen Gettermaterials erreicht. So ändert zum Beispiel Calciumoxid mit zunehmender Wasserbindung seine Farbe von weiß zu transparent. Auch metallisches Calcium verliert seine metallisch-undurchsichtige Erscheinung und wird zunehmend transparent. So lange also noch Gettermaterial in der optischen Erscheinung des unverbrauchten Zustands erkennbar ist, kann dies als Indiz dafür gelten, dass noch kein oder allenfalls wenig Permeat zur zu schützenden Klebemasse diffundiert ist.

### Beispiele

Es wurden verschiedene mit Gettermaterial gefüllte Liner hergestellt. Diese wurden mit verschiedenen Klebebändern mittels eines Labor-Walzenlaminators im Klimaraum bei 23 °C und einer relativen Luftfeuchte von 50 % laminiert.

### Klebebänder:

Zur Herstellung von Klebebändern wurden verschiedene Haftklebemassen aus einer Lösung auf einen konventionellen, nicht erfindungsgemäß ausgerüsteten permeationsdichten Liner des Typs ALU I 38 UV1 der Firma Mondi, enthaltend einen Träger aus Aluminiumfolie, mittels eines Laborstreichgeräts aufgebracht und getrocknet. Die Klebemassenschichtdicke nach dem Trocknen betrug jeweils 25 µm. Die Trocknung erfolgte jeweils bei 120 °C über 30 min in einem Labortrockenschrank.

**K1: Haftklebemasse**

| | | |
|---|---|---|
| 100 Teile | Tuftec P 1500 | SBBS mit 30 Gew.-% Blockpolystyrolgehalt der Firma Asahi. |
| | | Das SBBS enthält ca. 68 Gew.-% Zweiblockgehalt. |
| 100 Teile | Escorez 5600 | Hydriertes KW-Harz mit einem Erweichungspunkt von 100 °C der Firma Exxon |
| 25 Teile | Ondina 917 | Weißöl aus paraffinischen und naphthenischen Anteilen der Firma Shell |

Als Lösungsmittel wurde ein Gemisch aus Toluol und Aceton im Verhältnis 2:1 verwendet.

**K2: Heißschmelzklebemasse**

| | | |
|---|---|---|
| 100 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 25 Teile | Escorez 5600 | Hydriertes KW-Harz (Kohlenwasserstoffharz) mit einem Erweichungspunkt von 100 °C der Firma Exxon |
| 1 Teil | Aluminiumacetylacetonat | |

Als Lösungsmittel wurde ein Gemisch aus Toluol und Aceton im Verhältnis 2:1 verwendet.

**K3: Strahlenaktivierbare Heißschmelzklebemasse**

| | | |
|---|---|---|
| 25 Teile | Epiclon 835 LV | Bisphenol-A und Bisphenol-F basiertes Epoxidharz der Firma DIC, Japan, Molekulargewicht Mw ca. 350 g/mol |
| 25 Teile | Epicote 1001 | Bisphenol basiertes Epoxidharz der Firma Mitsubishi Chemical Company, Japan, Molekulargewicht Mw ca. 900 g/mol |
| 50 Teile | YP-70 | Bisphenol-A und Bisphenol-F basiertes Phenoxyharz der Fa. Nippon Steel Chemical Group, Japan, Molekulargewicht Mw ca. 55.000 g/mol |
| 1,5 Teile | Irgacure 250 | lodonium-Salz-basierter UV-Photoinitiator der Fa. BASF (lodonium, (4-methylphenyl) [4-(2-methylpropyl) phenyl]-, hexafluorophosphate(1-)) |

Als Lösemittel wurde Methylethylketon verwendet.

**K4: Hitzeaktivierbare Klebemasse**

| | | |
|---|---|---|
| 90 Teile | Ultramid 1C | Copolyamid 6/66/136 der Fa. BASF mit einer Viskositätszahl in 96 %iger Schwefelsäure nach ISO 307 von 122 ml/g |
| 10 Teile | EPR 166 | Bisphenol basiertes Epoxidharz der Firma Bakelite, Epoxidzahl von 184 |
| 20 Teile | PEG 2000 | Polyethylenglycol mit der mittleren Molmasse 2000 |
| 20 Teile | Foralyn 5040 | Klebharz der Firma Eastman |

Die Klebemasse wurde in einem Prozess, wie er in DE 102006047739 A1 offengelegt ist, mit Ethanol als Lösemittel hergestellt.

**K5: Strahlenaktivierbare Haftklebemasse**

| | | |
|---|---|---|
| 50 Teile | Uvacure 1500 | Reaktivharz der Firma Cytec |
| 20 Teile | Regalite R1100 | Vollydriertes KW-Harz (Kohlenwasserstoffharz) mit einem Erweichungspunkt von 100 °C der Firma Eastman |
| 30 Teile | Sibstar 73 T | Polystyrol-block-Polyisobutylen Blockcopolymer der Firma Kaneka mit einem Anteil an Styrol im Gesamtpolymer von 30 Gew.-%. und einer Molmasse M_{w} von 70.000 g/mol |
| 1,5 Teile | Irgacure 250 | lodonium-Salz-basierter UV-Photoinitiator der Fa. BASF (lodonium, (4-methylphenyl) [4-(2-methylpropyl) phenyl]-, hexafluorophosphate(1-)) |

Diese Rohstoffe wurden in einem Gemisch aus Toluol (30 Gew.%), Aceton (15 Gew.-%) und Siedegrenzenbenzin 60/95 (55 Gew.-%) gelöst, so dass eine 50 Gew.-% Lösung entsteht.

Die Klebemassen wurden zum einen Teil über 72 Stunden bei 23°C und 50 % relativer Luftfeuchte sowie zum anderen Teil über 72 Stunden bei 60°C und 95 % relativer Luftfeuchte gelagert. Der Wassergehalt der Klebemassen wurde vor der Lamination mit dem das Gettermaterial enthaltenden Liner jeweils ermittelt.

Von den Klebebändern 1 und 2 wurden zusätzlich auch Muster bei 120 °C nur 5 min lang getrocknet. Der verbliebene Restlösemittelgehalt wurde unmittelbar nach dem Trocknen ermittelt.

### Ermittlung des Restlösemittelgehalts:

Der Restlösemittelgehalt der Klebemassen wurde mittels Headspace-Gaschromatografie ermittelt. Es wurde eine etwa 12,5 cm² große Probenfläche aus dem Lappenmuster ausgeschnitten, auf eine Metalldrahtspirale geklebt und in ein ca. 22 ml großes Headspace-Probengläschen überführt.

Die Proben wurden mit einem Dani GC 86.10 Gaschromatographen mit Quma QHS-S40 Autosampler vermessen. Die Proben wurden für 1 Stunde bei 120°C im Gerät temperiert. Die Detektion erfolgte mittels Flammenionisationsdetektor (FID). Die Quantifizierung der Peaks im GC erfolgte gegen externe Standards.

### Gettermaterialgefüllte silikonbasierte Trennsysteme

Es wurden Trennsysteme auf einem ca. 75 µm dicken Polyesterträger (Lumirror 60.01/75 der Firma Toray Plastics, im Folgenden: PET) sowie auf einer circa 30 µm dicken, mit einer anorganischen Barrierschicht beschichteten Polyesterfolie (GX-P-F der Firma Toppan Printing, im Folgenden: Barriere-PET) bereitgestellt, indem die unten angegebenen Trennsystem-Formulierungen über eine Labor-Beschichtungsanlage aufgebracht wurden. Das Beschichtungsgewicht lag bei 2 g/m². Nach der Beschichtung wurden die Trennsysteme im Umluftofen 30 s lang bei 160 °C vernetzt.

Beim verwendeten Silikonsystem handelt es sich um ein additionsvernetzendes Silikonsystem der Firma Wacker. 9,75 g DEH 915 (ein mit Vinylgruppen funktionalisiertes Polydimethylsiloxan) wurden mit 0,33 g V24 (ein Methylhydrogenpolysiloxan) und 0,08 g Kat OL (ein Platinkatalysator, auch unter dem Namen "Karstedt-Katalysator" bekannt) gemischt. Zuvor wurden beide Rohstoffe mittels Zeolithkugeln (Molecular Sieves 4 Å des Lieferanten Sigma-Aldrich) bei 23 °C getrocknet.

Zu dem getrockneten Silikonsystem wurden unterschiedliche Gettermaterialien in unterschiedlichen Anteilen gegeben, die Mischung wurde homogenisiert und sofort beschichtet. Die beschichteten Liner wurden nach dem Trocknen in vakuumierten Beuteln aus einem permeationsdichten Folienlaminat (Polyesterfolie-Aluminiumfolie-Siegelkleberfilm) eingeschweißt und erst unmittelbar vor der Verwendung entnommen.

### Gettermaterialgefüllte polyolefinbasierte Releaseliner

Eine Folie wurde durch Flachfoliencoextrusion gefertigt. Sie bestand aus einer 50 µm dicken Basisschicht und einer 10 µm dicken Außenschicht. Die Basisschicht bestand aus 91,3 % (w/w) Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770.

Die Außenschicht bestand aus 85 % Ethylen-multi-Blockcopolymer Infuse D9107 (The Dow Chemical Company, d = 0,866 g/cm3) und 15 % Polyethylen LD251 (ExxonMobil, d = 0,9155) sowie dem Gettermaterial wie unten angegeben. Das Außenschichtmaterial wurde auf einer Zweischneckenextrusionsanlage der Fa. Coperion (d= 25 mm, L/d = 37) in-line mit der Flachfolienextrusion compoundiert und mittels einer zwischengeschalteten Schmelzepumpe in den Feedblock der Coextrusionseinheit gefördert. Das Gettermaterial wurde dem Zweischneckenextruder mittels eines Sidefeeders nach dem Aufschmelzen und Homogenisieren der Polymerkomponenten zugeführt.

Die so hergestellten Liner wurden nach dem Trocknen in vakuumierten Beuteln aus einem permeationsdichten Folienlaminat (Polyesterfolie-Aluminiumfolie-Siegelkleberfilm) eingeschweißt und erst unmittelbar vor der Verwendung entnommen.

### Gettermaterialgefüllte Trägerschicht für Trennbeschichtung

Die Polypropylen-Polymere Inspire D 404.01 und 7C06 der Firma Dow wurden im Verhältnis 1:1 gemischt und extrudiert. Die Folie wurde auf einer Zweischneckenextrusionsanlage der Firma Coperion (d= 25 mm, L/d = 37) mit angeflanschter Flachdüse in einer Schicht hergestellt, gefolgt von Chilirollstation und einer einstufigen Kurzspaltreckanlage. Das Gettermaterial wurde mittels eines Sidefeeders nach dem Aufschmelzen und Homogenisieren der Polymerkomponenten zugeführt.

Die Düsentemperatur betrug 235°C. Chillroll-Temperaturen und Reckwalzen-Temperaturen wurden so eingestellt, dass die Kristallinität der Folie vor und nach dem Reckvorgang so hoch wie möglich wurde. Das Reckverhältnis betrug 1:10. Die Folie hatte eine finale Dicke von 100 µm.

Die so hergestellten Träger wurden wie oben beschrieben unmittelbar nach der Herstellung mit dem getrockneten Silikonsystem (ohne weitere Getterzugabe) beschichtet.

Die beschichteten Liner wurden nach dem Vernetzen des Silikonsystems in vakuumierten Beuteln aus einem permeationsdichten Folienlaminat (Polyesterfolie-Aluminiumfolie-Siegelkleberfilm) eingeschweißt und erst unmittelbar vor der Verwendung entnommen.

**Verwendete Gettermaterialien:**

| Bezeichnung | Beschreibung | Handelsname | Lieferant |
|---|---|---|---|
| G1 | Calciumoxid | Calcium oxide nanopowder | Sigma-Aldrich |
| G2 | Calciumsulfat | CA-5™ Calcium Sulfate Filler | United States Gypsum Company |
| G3 | Calciumchlorid | Calcium chloride CA-CL-02-NP (Nanoparticles) | Sigma-Aldrich American Elements |
| G4 | Silica | Aerosil 380 | Evonik Degussa |
| G5 | Carbodiimid | Stabaxol P200 | Rhein Chemie |
| G6 | Zeolith 3A | Purmol 3 STH | Zeochem |
| G7 | Zeolith 13X | Molecular Sieves, 13X powder | Sigma-Aldrich |

Die Gettermaterialien G2, G3, G6 und G7 wurden für die Applikation in dünnen Schichten (zum Beispiel Trennschichten), erforderlichenfalls gemahlen und gesiebt, so dass keine Partikel enthalten waren, die größer als die Schichtdicke waren. Nach dem Mahlprozess wurden diese Partikel durch Wärmebehandlung in dem Fachmann bekannter Weise regeneriert. Erforderlichenfalls wurden die Trenn- oder Trägerschichtmaterialien nach dem Einbringen der Gettermaterialien und vor oder während der Herstellung der Schichten entsprechend gefiltert.

### Messung des Trennverhaltens

Die oben beschriebenen Releaseliner wurden mit jeweils 20 mm breiten und 300 mm langen Streifen des Testklebebands tesa® 7475 verbunden. Bei dem Testband tesa® 7475 handelt es sich um einen 40 µm dicken PVC-Träger, der mit 95 g/m² einer Harzmodifizierten Acrylat-Haftklebmasse beschichtet ist.

Pro Probe wurden jeweils 3 Laminate aus Liner mit Testband tesa® 7475 unter Druck und Temperatur 24 h lang gelagert. Die Temperatur bei der Lagerung betrug 70 °C für das Testband tesa® 7475. Der Druck betrug 4 N/cm².

Nach der anschließenden Lagerung der Proben für 2 Stunden in einem klimatisierten Messraum bei 23 °C und 50 % relativer Luftfeuchtigkeit wurde das Trennverhalten mit Hilfe einer Zugkraftprüfung bei einer Abzugsgeschwindigkeit von 300 mm/min ebenfalls bei 23 °C und 50 % relativer Luftfeuchtigkeit bestimmt. Als Trennkraft wird der arithmetische Mittelwert der drei Muster angegeben.

### Messung des Wassergehalts

Der Wassergehalt wurde ermittelt nach DIN 53715 (Karl-Fischer-Titration). Die Messung erfolgte an einem Karl-Fischer Coulometer 851 in Verbindung mit einem Ovensampler (Ofentemperatur 140 °C). Mit einer Einwaage von ca. 0,3 g wurde jeweils eine Dreifachbestimmung durchgeführt. Als Wassergehalt wird der arithmetische Mittelwert der Messungen angegeben.

Tabelle 1 zeigt die hergestellten Gettermaterial-haltigen Liner und deren Trennkräfte im Überblick:

**Tabelle 1: Gettermaterial-gefüllte Liner**

| Bezeichnung | Trägermaterial | Trennschicht | Gettermaterial | Anteil Getter [Gew.-%] | Trennkraft [cN/cm] |
|---|---|---|---|---|---|
| L1 | PET | Silicon + Getter | G1 | 3 | 10 |
| L2 | PET | Silicon + Getter | G1 | 10 | 14 |
| L3 | PET | Silicon + Getter | G2 | 10 | 18 |
| L4 | PET | Silicon + Getter | G3 | 10 | 17 |
| L5 | PET | Silicon + Getter | G4 | 10 | 21 |
| L6 | PET | Silicon + Getter | G5 | 10 | 9 |
| L7 | PET | Silicon + Getter | G6 | 10 | 14 |
| L8 | PET | Silicon + Getter | G7 | 10 | 15 |
| L9 | PP | PE+Getter | G1 | 3 | 130 |
| L10 | PP | PE+Getter | G1 | 10 | 150 |
| L11 | PP + Getter | Silicon | G1 | 10 | 8 |
| L12 | PP + Getter | Silicon | G1 | 20 | 8 |
| L13 | PP + Getter | Silicon | G3 | 10 | 7 |
| L14 | PP + Getter | Silicon | G6 | 10 | 8 |
| L15 | Barriere-PET | Silicon + Getter | G1 | 10 | 13 |
| L16 | Barriere-PET | Silicon + Getter | G1 | 30 | 52 |
| L17 (Vergleichsbeispiel) | PET | Slicon | - | 0 | 8 |

Die ermittelten Trennkräfte zeigen, dass alle hergestellten Liner als solche brauchbar sind. Die Trennkräfte für die Polyolefin-Trennschicht liegen im für solche Schichten bekannten Bereich.

Zur weiteren Untersuchung wurden etwa 100 x 100 mm² große Klebebandabschnitte wie bereits oben beschrieben in verschiedenen Klimata konditioniert und unmittelbar danach bei 23 °C und 50 % relativer Luftfeuchte mit dem Liner mittels eines Laborlaminators eingedeckt. Die so hergestellten Laminate wurden über 72 h in folgenden Klimata gelagert:
Klima A: 23 °C, 50 % relative Luftfeuchtigkeit
Klima B: 23 °C, 95 % relative Luftfeuchtigkeit
Klima C: 23 °C, verschlossen in vakuumierter, permeationsdichter Verpackung

Abschließend wurde bei den Mustern der Wassergehalt bzw. der Toluolgehalt in der Klebemasse bestimmt. Proben wurden dabei aus der Mitte der Musterfläche entnommen, um Randeffekte zu vermeiden. Die Ergebnisse sind in Tabelle 2 zusammengefasst:

**Tabelle 2: Bestimmung des Wassergehalts**

| Beispiel | Liner | Klebemasse | Konditionierung Klebemasse | Lagerklima Verbund | Wassergehalt Klebemasse [ppm (Massenbruch)] | |
|---|---|---|---|---|---|---|
| | | | | | nach Konditionierung | nach Lagerung |
| 1 | L1 | K1 | Klima A | Klima B | 853 | 1134 |
| 2 | L2 | K1 | Klima A | Klima B | 853 | 1122 |
| 3 | L3 | K1 | Klima A | Klima B | 853 | 1116 |
| 4 | L4 | K1 | Klima A | Klima B | 853 | 1073 |
| 5 | L5 | K1 | Klima A | Klima B | 853 | 1130 |
| 6 | L6 | K1 | Klima A | Klima B | 853 | 1138 |
| 7 | L7 | K1 | Klima A | Klima B | 853 | 1130 |
| 8 | L9 | K1 | Klima A | Klima B | 853 | 1118 |
| 9 | L10 | K1 | Klima A | Klima B | 853 | 1071 |
| 10 | L11 | K1 | Klima A | Klima B | 853 | 1071 |
| 11 | L12 | K1 | Klima A | Klima B | 853 | 221 |
| 12 | L13 | K1 | Klima A | Klima B | 853 | 216 |
| 13 | L14 | K1 | Klima A | Klima B | 853 | 887 |
| 14 | L1 | K1 | Klima B | Klima C | 1265 | 871 |
| 15 | L2 | K1 | Klima B | Klima C | 1265 | 500 |
| 16 | L3 | K1 | Klima B | Klima C | 1265 | 364 |
| 17 | L4 | K1 | Klima B | Klima C | 1265 | 125 |
| 18 | L5 | K1 | Klima B | Klima C | 1265 | 966 |
| 20 | L7 | K1 | Klima B | Klima C | 1265 | 1005 |
| 21 | L9 | K1 | Klima B | Klima C | 1265 | 303 |
| 22 | L10 | K1 | Klima B | Klima C | 1265 | 91 |
| 23 | L11 | K1 | Klima B | Klima C | 1265 | 128 |
| 24 | L12 | K1 | Klima B | Klima C | 1265 | 104 |
| 25 | L13 | K1 | Klima B | Klima C | 1265 | 93 |
| 26 | L14 | K1 | Klima B | Klima C | 1265 | 185 |
| 27 | L2 | K2 | Klima A | Klima B | 551 | 747 |
| 28 | L4 | K2 | Klima A | Klima B | 551 | 712 |
| 29 | L7 | K2 | Klima A | Klima B | 551 | 753 |
| 30 | L12 | K2 | Klima A | Klima B | 551 | 205 |
| 31 | L2 | K2 | Klima B | Klima C | 843 | 222 |
| 32 | L4 | K2 | Klima B | Klima C | 843 | 56 |
| 33 | L7 | K2 | Klima B | Klima C | 843 | 444 |
| 34 | L12 | K2 | Klima B | Klima C | 843 | 126 |
| 35 | L2 | K3 | Klima A | Klima B | 3216 | 5114 |
| 36 | L4 | K3 | Klima A | Klima B | 3216 | 4804 |
| 37 | L7 | K3 | Klima A | Klima B | 3216 | 5166 |
| 38 | L12 | K3 | Klima A | Klima B | 3216 | 485 |
| 39 | L2 | K3 | Klima B | Klima C | 5797 | 5552 |
| 40 | L4 | K3 | Klima B | Klima C | 5797 | 2625 |
| 41 | L7 | K3 | Klima B | Klima C | 5797 | 4935 |
| 42 | L12 | K3 | Klima B | Klima C | 5797 | 366 |
| 43 | L2 | K4 | Klima A | Klima B | 16400 | 34700 |
| 44 | L4 | K4 | Klima A | Klima B | 16400 | 32000 |
| 45 | L7 | K4 | Klima A | Klima B | 16400 | 35100 |
| 46 | L12 | K4 | Klima A | Klima B | 16400 | 3643 |
| 47 | L2 | K4 | Klima B | Klima C | 39600 | 33200 |
| 48 | L4 | K4 | Klima B | Klima C | 39600 | 24800 |
| 49 | L7 | K4 | Klima B | Klima C | 39600 | 38100 |
| 50 | L12 | K4 | Klima B | Klima C | 39600 | 2640 |
| 51 | L15 | K1 | Klima A | Klima B | 853 | 974 |
| 52 | L15 | K2 | Klima A | Klima B | 551 | 642 |
| 53 | L15 | K3 | Klima A | Klima B | 3216 | 4185 |
| 54 | L15 | K4 | Klima A | Klima B | 16400 | 26700 |
| 55 | L16 | K1 | Klima A | Klima B | 853 | 644 |
| | | | | | | |

| Vergleichsbeispiele | | | | | | |
|---|---|---|---|---|---|---|
| V1 | L17 | K1 | Klima A | Klima B | 853 | 1337 |
| V2 | L17 | K2 | Klima A | Klima B | 551 | 894 |
| V3 | L17 | K3 | Klima A | Klima B | 3216 | 6882 |
| V4 | L17 | K4 | Klima A | Klima B | 16400 | 38700 |
| V5 | L17 | K1 | Klima B | Klima C | 1265 | 1136 |
| V6 | L17 | K2 | Klima B | Klima C | 843 | 801 |
| V7 | L17 | K3 | Klima B | Klima C | 5797 | 5623 |
| V8 | L17 | K4 | Klima B | Klima C | 39600 | 39400 |
| | | | | | | |

| Beispiel | Liner | Klebemasse (Trocknungstemp.) | Konditionierung Klebemasse | Lagerklima Verbund | Restlösemittelgehalt Klebemasse [mg/m²] | |
|---|---|---|---|---|---|---|
| | | | | | nach Trocknung | nach Lagerung |
| 56 | L8 | K1 (100 °C) | - | Klima C | 95,4 | 66,9 |
| 57 | L8 | K2 (100 °C) | - | Klima C | 83,8 | 62,3 |
| | | | | | | |

| Vergleichsbeispiele | | | | | | |
|---|---|---|---|---|---|---|
| V9 | L17 | K1 (100 °C) | - | Klima C | 95,4 | 85.7 |
| V10 | L17 | K2 (100 °C) | - | Klima C | 83,8 | 81,8 |

Die Ergebnisse zeigen, dass erfindungsgemäß ausgerüstete Liner geeignet sind, Permeate von Klebebändern fernzuhalten (Beispiele 1-13, 27-30, 35 - 38, 43 - 46 und 51 - 55 im Vergleich zu den Vergleichsbeispielen V1 - V 4). Dabei zeigte sich überraschend, dass Liner, deren Gettermaterial im Träger dispergiert war (L11 - L 14), eine höhere Effizienz aufweisen.

Weiterhin ist es vorteilhaft, wenn das Trägermaterial selbst eine hohe Barriere gegen das Permeat aufweist (L15 - L16), da dann in den Versuchen die Getterkapazität ausreichte, nahezu die gesamte Permeatmenge abzufangen.

Überraschend gut eignen sich erfindungsgemäß ausgerüstete Liner auch zur Entfernung von Permeaten aus Klebebändern (Beispiele 14 - 26, 31 - 34, 39 - 42, 47 - 50). Dabei zeigte sich auch hier überraschend, dass Liner, deren Gettermaterial im Träger dispergiert war (L11 - L 14), eine höhere Effizienz aufweisen, obwohl die Gettermaterial-haltige Schicht nicht in direktem Kontakt zu der Klebemasseschicht stand.

In weiteren Beispielen wurden Liner verwendet, wie sie in Fig. 2 gezeigt sind (siehe Tabelle 3).

**Tabelle 3: Gettermaterial-gefüllte Liner**

| Bezeichnung | Trennschicht | Träger material (Dicke) | Klebemasse | Getter material | Anteil Getter [Gew .-%] | Schichtdicke Klebemasse [µm] | weiteres Trägermaterial |
|---|---|---|---|---|---|---|---|
| L18 | Silicon | PET (36 µm) | K1 | G1 | 20 | 70 | BOPP |
| L19 | Silicon | PET (36 µm) | K1 | G1 | 20 | 40 | BOPP |
| L20 | Silicon | PET (36 µm) | K1 | G1 | 40 | 90 | BOPP |
| L21 | Silicon | PET (12 µm) | K1 | G1 | 20 | 40 | BOPP |
| L22 | Silicon | PET | K1 | G3 | 20 | 50 | BOPP |

| | | (36 µm) | | | | | |
|---|---|---|---|---|---|---|---|
| L23 | Silicon | PET (36 µm) | K1 | G3 | 40 | 60 | BOPP |
| L24 | Silicon | PET (36 µm) | K1 | G6 | 20 | 25 | BOPP |
| L25 | Silicon | Papier | K1 | G1 | 10 | 25 | AL/PP |
| L26 (Vergleich s-beispiel) | Silicon | PET (36 µm) | K1 | - | 0 | 25 | BOPP |

Als Verbund von Trennschicht und Trägermaterial wurden dabei konventionelle Liner der Typen Silphan S 12 M 2R13017 (12 µm PET), SILPHAN S36 M372 (36 µm PET), erhältlich von der Firma Siliconature, Italien, sowie KS 900 weiß 52B 20 (Papier), erhältlich von der Firma Laufenberg, Krefeld, verwendet.

Als weiteres Trägermaterial wurden eine BOPP-Folie mit einer Dicke von 36 µm der Firma Pao-Yan, Taiwan, sowie ein Laminat aus Aluminiumfolie und BOPP der Firma Novelis, Berlin, verwendet.

Die Gettermaterialien wurden mittels eines Dissolvers in die in Lösung befindliche Klebemasse eingearbeitet. Die Klebemasse wurde sodann mittels eines Laborstreichgeräts auf dem zweiten Trägermaterial ausgestrichen und getrocknet. Anschließend wurden die konventionellen Liner mittels eines Laborlaminiergeräts mit ihrer nicht abhäsiven Seite auf die gettergefüllte Klebemasseschicht laminiert. Die gettermaterialgefüllten Liner waren somit fertiggestellt.

Zur weiteren Untersuchung wurden etwa 100 x 100 mm² große Klebebandabschnitte der Klebemasse wie bereits oben beschrieben 24 h in Klima A konditioniert und unmittelbar danach bei 23 °C und 50 % relativer Luftfeuchte mit dem Liner mittels eines Laborlaminators eingedeckt. Die so hergestellten Laminate wurden über 14 Tage in Klima C gelagert. Die Muster wurden sodann in einer Glovebox (Atmosphäre: Wasserdampf < 5 ppm, Sauerstoff < 1 ppm) ihrer Verpackung entnommen und es wurde jeweils unverzüglich Klebemasse zur Wassergehaltsbestimmung in Glasbehälter eingesiegelt. Die Ergebnisse sind in Tabelle 4 dargestellt.

**Tabelle 4: Bestimmung des Wassergehalts**

| Beispiel | Liner | Klebemasse | Konditionierung Klebemasse | Lagerklima Verbund | Wassergehalt Klebemasse [ppm (Massenbruch)] | |
|---|---|---|---|---|---|---|
| | | | | | nach Konditionierung | nach Lagerung |
| 58 | L18 | K5 | Klima A | Klima C | 1009 | 26 |
| 59 | L19 | K5 | | | 1009 | 30 |
| 60 | L20 | K5 | | | 1009 | 57 |
| 61 | L21 | K5 | | | 1009 | 21 |
| 62 | L18 | K1 | | | 853 | 16 |
| 63 | L19 | K1 | | | 853 | 22 |
| 64 | L22 | K5 | | | 1009 | 5 |
| 65 | L23 | K5 | | | 1009 | 7 |
| 66 | L24 | K5 | | | 1009 | < 2* |
| 67 | L25 | K5 | | | 1009 | 84 |
| Vergleichsbeispiel | | | | | | |
| V11 | L26 | K5 | | | 1009 | 902 |

| | | | | | | |
|---|---|---|---|---|---|---|
| * Messgrenze | | | | | | |

Die Ergebnisse zeigen, dass eine Trocknung der zu schützenden Klebemasse überraschend sogar durch eine Membran erfolgt, die selbst Permeat (hier Wasser) enthält (Papier und PET) und wie im Fall von PET im Vergleich zu silikonisiertem Papier nur eine geringe Permeatdurchlässigkeit aufweist. Weiterhin überraschend führt eine hohe Beladung der gettermaterialhaltigen Schicht nicht zwangsläufig zu einer Verbesserung der Trocknungswirkung (Beispiele 60 und 65 im Vergleich zu 59 beziehungsweise 64).

Wie hier gezeigt wird, kann also ein erfindungsgemäß ausgerüsteter Liner leicht aus einem konventionellen Liner durch Hinzufügen einer gettermaterialhaltigen Schicht auf dessen Trägermaterialseite erhalten werden. Das Vergleichsbeispiel V11 verdeutlicht die überraschend hohe Wirksamkeit des Gettermaterial-haltigen Liners nach diesem bevorzugten Aufbau. Der geringe Wasserverlust in diesem Vergleichsbeispiel ist der Präparation der Muster in der Glovebox zuzurechnen, da bei dem hohen Wassergehalt der zu untersuchenden Klebemasse eine Trocknung durch die trockenen Gloveboxbedingungen bereits einsetzt.

## Patentansprüche

1. Verwendung von zur Sorption mindestens einer permeationsfähigen Substanz befähigtem Gettermaterial zur Ausrüstung von Linern zum Schutz von Klebemassen.

2. Verwendung gemäß Anspruch 1, **dadurch gekennzeichnet, dass** die Liner zum Schutz von Klebemassen mindestens eine abhäsive Trennschicht enthalten und das Gettermaterial als dispergierte Phase in mindestens einer Schicht des Liners enthalten ist.

3. Verwendung gemäß mindestens einem der vorstehenden Ansprüche, **dadurch gekennzeichnet, dass** das Gettermaterial ausgewählt ist aus der Gruppe umfassend Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Natriumsulfat, Kaliumcarbonat, Zeolithe, Calcium, Magnesium, Bariumoxid, Calciumoxid, Magnesiumoxid, Natriumoxid, Kaliumoxid, Strontiumoxid, Aktivkohle, Phosphorpentoxid, Silane, Calciumhydrid, Bariumhydrid, Strontiumhydrid, Natriumhydrid und Lithiumaluminiumhydrid, Kaliumhydroxid, Natriumhydroxid, Essigsäureanhydrid, Propionsäureanhydrid, Buttersäureanhydrid, Methyltetrahydrophtalsäureanhydrid und Carbodiimide sowie Mischungen von zwei oder mehreren der vorstehenden Substanzen.

4. Verwendung gemäß mindestens einem der Ansprüche 1 und 2, **dadurch gekennzeichnet, dass** das Gettermaterial ausgewählt ist aus der Gruppe umfassend Calciumchlorid, Calciumoxid, Bortrioxid, Natriumsulfat, Kaliumcarbonat, Kupfersulfat, Magnesiumperchlorat, Magnesiumsulfat und Zeolithe sowie Mischungen von zwei oder mehreren der vorstehenden Substanzen

5. Verwendung gemäß Anspruch 3, **dadurch gekennzeichnet, dass** das Gettermaterial ausgewählt ist aus der Gruppe umfassend Calciumoxid, Calciumsulfat, Calciumchlorid und Zeolithe sowie Mischungen von zwei oder mehreren der vorstehenden Substanzen.

6. Verwendung gemäß mindestens einem der Ansprüche 1 und 2, **dadurch gekennzeichnet, dass** das Gettermaterial ausgewählt ist aus der Gruppe umfassend Calciumoxid, Calcium, Eisen, Barium, Lithiumchlorid und Cobaltchlorid.

7. Verwendung gemäß mindestens einem der Ansprüche 2 bis 6, **dadurch gekennzeichnet, dass** das Gettermaterial in Form von Partikeln in einer Partikelgrößenverteilung vorliegt, bei der maximal 1 Vol.-% die mittlere Schichtdicke der gettermaterialhaltigen Schicht überschreitet.

8. Verwendung gemäß mindestens einem der Ansprüche 2 bis 6, **dadurch gekennzeichnet, dass** das Gettermaterial in Form von Partikeln in einer Partikelgrößenverteilung vorliegt, bei der zumindest 10 Vol.-% die mittlere Schichtdicke der gettermaterialhaltigen Schicht überschreiten.

9. Verwendung gemäß mindestens einem der Ansprüche 2 bis 8, **dadurch gekennzeichnet, dass** der Liner eine Trägerschicht sowie eine zwischen Trägerschicht und abhäsiver Trennschicht angeordnete Zwischenschicht enthält, wobei das Gettermaterial in der Zwischenschicht enthalten ist.

10. Verwendung gemäß Anspruch 9, **dadurch gekennzeichnet, dass** die Zwischenschicht einen Klebstoff als kontinuierliche Phase enthält.

11. Verwendung gemäß mindestens einem der Ansprüche 9 und 10, **dadurch gekennzeichnet, dass** der Liner eine weitere Trägerschicht enthält und die Zwischenschicht zwischen den beiden Trägerschichten angeordnet ist.

## Claims

1. Use of getter material capable of sorbing at least one permeable substance for furnishing liners for protecting adhesives.

2. Use according to Claim 1, **characterized in that** the liners for protecting adhesives comprise at least one abhesive release layer and the getter material is present as a dispersed phase in at least one layer of the liner.

3. Use according to at least one of the preceding claims, **characterized in that** the getter material is selected from the group encompassing cobalt chloride, calcium chloride, calcium bromide, lithium chloride, lithium bromide, magnesium chloride, barium perchlorate, magnesium perchlorate, zinc chloride, zinc bromide, aluminum sulfate, calcium sulfate, copper sulfate, barium sulfate, magnesium sulfate, lithium sulfate, sodium sulfate, cobalt sulfate, titanium sulfate, sodium carbonate, sodium sulfate, potassium carbonate, zeolites, calcium, magnesium, barium oxide, calcium oxide, magnesium oxide, sodium oxide, potassium oxide, strontium oxide, activated carbon, phosphorus pentoxide, silanes, calcium hydride, barium hydride, strontium hydride, sodium hydride and lithium aluminum hydride, potassium hydroxide, sodium hydroxide, acetic anhydride, propionic anhydride, butyric anhydride, methyltetrahydrophthalic anhydride, and carbodiimides, and also mixtures of two or more of the above substances.

4. Use according to at least one of Claims 1 and 2, **characterized in that** the getter material is selected from the group encompassing calcium chloride, calcium oxide, boron trioxide, sodium sulfate, potassium carbonate, copper sulfate, magnesium perchlorate, magnesium sulfate, and zeolites, and also mixtures of two or more of the above substances.

5. Use according to Claim 3, **characterized in that** the getter material is selected from the group encompassing calcium oxide, calcium sulfate, calcium chloride, and zeolites, and also mixtures of two or more of the above substances.

6. Use according to at least one of Claims 1 and 2, **characterized in that** the getter material is selected from the group encompassing calcium oxide, calcium, iron, barium, lithium chloride, and cobalt chloride.

7. Use according to at least one of Claims 2 to 6, **characterized in that** the getter material is present in the form of particles in a particle size distribution in which not more than 1 vol% exceeds the average layer thickness of the layer comprising getter material.

8. Use according to at least one of Claims 2 to 6, **characterized in that** the getter material is present in the form of particles in a particle size distribution in which at least 10 vol% exceed the average layer thickness of the layer comprising getter material.

9. Use according to at least one of Claims 2 to 8, **characterized in that** the liner comprises a carrier layer and also an interlayer disposed between carrier layer and abhesive release layer, the getter material being present in the interlayer.

10. Use according to Claim 9, **characterized in that** the interlayer comprises an adhesive as continuous phase.

11. Use according to at least one of Claims 9 and 10, **characterized in that** the liner comprises a further carrier layer, and the interlayer is disposed between the two carrier layers.

## Revendications

1. Utilisation d'un matériau absorbant apte à la sorption d'au moins une substance apte à la perméation pour le traitement de feuilles de séparation pour la protection de masses adhésives.

2. Utilisation selon la revendication 1, **caractérisée en ce que** les feuilles de séparation pour la protection de masses adhésives contiennent au moins une couche de séparation abhésive et le matériau absorbant est contenu en tant que phase dispersée dans au moins une couche de la feuille de séparation.

3. Utilisation selon au moins l'une quelconque des revendications précédentes, **caractérisée en ce que** le matériau absorbant est choisi dans le groupe comprenant le chlorure de cobalt, le chlorure de calcium, le bromure de calcium, le chlorure de lithium, le bromure de lithium, le chlorure de magnésium, le perchlorate de baryum, le perchlorate de magnésium, le chlorure de zinc, le bromure de zinc, le sulfate d'aluminium, le sulfate de calcium, le sulfate de cuivre, le sulfate de baryum, le sulfate de magnésium, le sulfate de lithium, le sulfate de sodium, le sulfate de cobalt, le sulfate de titane, le carbonate de sodium, le sulfate de sodium, le carbonate de potassium, les zéolithes, le calcium, le magnésium, l'oxyde de baryum, l'oxyde de calcium, l'oxyde de magnésium, l'oxyde de sodium, l'oxyde de potassium, l'oxyde de strontium, le charbon actif, le pentoxyde de phosphore, les silanes, l'hydrure de calcium, l'hydrure de baryum, l'hydrure de strontium, l'hydrure de sodium et l'hydrure de lithium et d'aluminium, l'hydroxyde de potassium, l'hydroxyde de sodium, l'anhydride de l'acide acétique, l'anhydride de l'acide propionique, l'anhydride de l'acide butyrique, l'anhydride de l'acide méthyltétrahydrophtalique et les carbodiimides, ainsi que les mélanges de deux ou plus des substances précédentes.

4. Utilisation selon au moins l'une quelconque des revendications 1 et 2, **caractérisée en ce que** le matériau absorbant est choisi dans le groupe comprenant le chlorure de calcium, l'oxyde de calcium, le trioxyde de bore, le sulfate de sodium, le carbonate de potassium, le sulfate de cuivre, le perchlorate de magnésium, le sulfate de magnésium et les zéolithes, ainsi que les mélanges de deux ou plus des substances précédentes.

5. Utilisation selon la revendication 3, **caractérisée en ce que** le matériau absorbant est choisi dans le groupe comprenant l'oxyde de calcium, le sulfate de calcium, le chlorure de calcium et les zéolithes, ainsi que les mélanges de deux ou plus des substances précédentes.

6. Utilisation selon au moins l'une quelconque des revendications 1 et 2, **caractérisée en ce que** le matériau absorbant est choisi dans le groupe comprenant l'oxyde de calcium, le calcium, le fer, le baryum, le chlorure de lithium et le chlorure de cobalt.

7. Utilisation selon au moins l'une quelconque des revendications 2 à 6, **caractérisée en ce que** le matériau absorbant se présente sous la forme de particules ayant une distribution des tailles de particules selon laquelle au plus 1 % en volume dépasse l'épaisseur de couche moyenne de la couche contenant le matériau absorbant.

8. Utilisation selon au moins l'une quelconque des revendications 2 à 6, **caractérisée en ce que** le matériau absorbant se présente sous la forme de particules ayant une distribution des tailles de particules selon laquelle au moins 10 % en volume dépasse l'épaisseur de couche moyenne de la couche contenant le matériau absorbant.

9. Utilisation selon au moins l'une quelconque des revendications 2 à 8, **caractérisée en ce que** la feuille de séparation contient une couche support, ainsi qu'une couche intermédiaire agencée entre la couche support et la couche de séparation abhésive, le matériau absorbant étant contenu dans la couche intermédiaire.

10. Utilisation selon la revendication 9, **caractérisée en ce que** la couche intermédiaire contient un adhésif en tant que phase continue.

11. Utilisation selon au moins l'une quelconque des revendications 9 et 10, **caractérisée en ce que** la feuille de séparation contient une couche support supplémentaire et la couche intermédiaire est agencée entre les deux couches supports.
